# EUROPEAN PATENT APPLICATION

(11) **EP 2 832 565 A1**
(43) Date of publication of application: **04.02.2015**
(21) Application number: 12872920.9
(22) Date of filing: 28.03.2012
(51) Int. Cl.: B60H 1/34, B60H 1/00

(54) **VEHICLE AIR-CONDITIONING DEVICE**

(71) Applicant: Toyota Jidosha Kabushiki Kaisha, Toyota-shi, Aichi 471-8571 (JP)
(72) Inventor: SAKURAI, Hideyuki, Toyota-shi, Aichi 471-8571 (JP); SATO, Takao, Toyota-shi, Aichi 471-8571 (JP); HASEGAWA, Kayoko, Toyota-shi, Aichi 471-8571 (JP); SHIBUYA, Yasushi, Toyota-shi, Aichi 471-8571 (JP)
(74) Representative: Intès, Didier Gérard André
(86) International application number: PCT/JP2012/058201
(87) International publication number: WO 2013/145172

(57) **Abstract**

There is obtained a vehicular air-conditioning device that can restrain the space of a cabin from decreasing.

The vehicular air-conditioning device (10) is equipped with a fan (16) that produces an air current, a main current blowout port (66) from which the air current produced through the operation of this fan (16) is blown out toward a cabin (12), and a wind direction adjustment current blowout port (68) from which the air current produced through the operation of the fan (16) is blown out toward the cabin (12) and which is arranged such that the air current (F3) thus blown out intersects with the air current (F1) blown out from the main current blowout port (66).

## Description

### TECHNICAL FIELD

The invention relates to a vehicular air-conditioning device.

### BACKGROUND ART

Conventionally, there is known an air blower that blows air whose amount exceeds an amount of air blown out from a nozzle, with the aid of a Coanda effect (e.g., see Japanese Patent Application Publication No. 2010-77969 (JP-2010-77969 A)). Besides, vehicular air-conditioning devices described in Japanese Patent Application Publication No. 2007-50781 (JP-2007-50781 A), Japanese Patent Application Publication No. 2005-35423 (JP-2005-35423 A), and Japanese Patent Application Publication No. 2004-148965 (JP-2004-148965 A) are known.

### SUMMARY OF THE INVENTION

### Problem to Be Solved by the Invention

However, the orientation of the conventional air blower as a whole needs to be changed in order to change the wind direction. In the case where such an air blower is provided as a vehicular air-conditioning device, a movable space for adjusting the wind direction needs to be secured. As a result, there is a possibility of a decrease in the space of a cabin.

In view of the aforementioned fact, it is an object of the invention to obtain a vehicular air-conditioning device that can restrain the space of a cabin from decreasing.

### Means for Solving the Problem

A vehicular air-conditioning device according to a first aspect of the invention is equipped with a fan that operates to produce an air current, a flow channel into which the air current produced by the fan is introduced, a first blowout port from which the air current introduced into the flow channel is blown out toward a cabin, and a second blowout port from which the air current introduced into the flow channel is blown out toward the cabin and which is arranged such that the air current thus blown out intersects with the air current blown out from the first blowout port.

According to the aforementioned aspect of the invention, when the air current produced through the operation of the fan is introduced into the flow channel, this air current is blown out from the first blowout port and the second blowout port toward the cabin. It should be noted herein that the air current blown out from the first blowout port and the air current blown out from the second blowout port intersect with each other in the present aspect of the invention. In other words, the wind direction of the air current blown out from the first blowout port is changed through the convergence of the air current blown out from the second blowout port from beside the air current blown out from the first blowout port, without separately providing a register or the like for adjusting the wind direction.

A vehicular air-conditioning device according to a second aspect of the invention is configured by further equipping the vehicular air-conditioning device according to the aforementioned first aspect of the invention with a flow rate adjustment portion that adjusts a flow rate of the air current blown out from the second blowout port.

According to the aforementioned aspect of the invention, the flow rate adjustment portion that adjusts the flow rate of the air current blown out from the second blowout port is provided. Thus, the wind direction of the air current blown out from the first blowout port can be adjust to an arbitrary wind direction by operating this flow rate adjustment portion.

A vehicular air-conditioning device according to a third aspect of the invention is configured by modifying the vehicular air-conditioning device according to the aforementioned second aspect of the invention such that a lever for operating the flow rate adjustment portion is provided at a position that is offset from a position that is opposed to the first blowout port and the second blowout port in such a direction as to intersect with both a blowout direction of the first blowout port and a blowout direction of the second blowout port.

According to the aforementioned aspect of the invention, the lever for operating the flow rate adjustment portion is arranged at the aforementioned position. Thus, in the case where an operator manually operates this lever, the air current blown out from the first blowout port and the air current blown out from the second blowout port do not directly hit the hand of the operator. In other words, the hand of this operator does not block the air current blown out from the first blowout port and the air current blown out from the second blowout port. As a result, the operator can adjust the wind direction while directly feeling how the wind direction changes.

A vehicular air-conditioning device according to a fourth aspect of the invention is configured by modifying the vehicular air-conditioning device according to any one of the aforementioned first to third aspects of the invention such that the air current produced by the fan is introduced into a ceiling portion of the cabin, and that the ceiling portion of the cabin is provided with a blowout body that is equipped with the first blowout port, which is provided in such a manner as to open toward a vehicle rear side, and the second blowout port, which is provided in such a manner as to open toward a vehicle lower side.

According to the aforementioned aspect of the invention, the ceiling portion of the cabin is provided with the blowout body configured as described above. Thus, the air current blown out from the second blowout port toward the vehicle lower side converges from upstream of the air current blown out from the first blowout port toward the vehicle rear side. As a result, the wind direction of the air current blown out from the first blowout port is changed into the wind direction in which the air current flows diagonally toward the vehicle lower side. In other words, the wind direction of the air current blown out from the first blowout port is changed without separately providing the ceiling portion of the cabin with a resister or the like for adjusting the wind direction.

A vehicular air-conditioning device according to a fifth aspect of the invention is configured by modifying the vehicular air-conditioning device according to the aforementioned fourth aspect of the invention such that the first blowout port is provided upstream of the air current introduced into the blowout body, and that the second blowout port is provided downstream of this air current.

According to the aforementioned aspect of the invention, the first blowout port and the second blowout port are provided at the aforementioned positions in the blowout body respectively. Thus, the pressure of the air current blown out from the first blowout port can be made higher than the pressure of the air current blown out from the second blowout port. That is, according to the present aspect of the invention, a high-pressure air current (a main current) and a low-pressure air current (an air current for adjusting the wind direction of the main current) can be obtained without providing a plurality of fans.

A vehicular air-conditioning device according to a sixth aspect of the invention is configured by modifying the vehicular air-conditioning device according to the aforementioned fourth or fifth aspect of the invention such that an introduction port of air introduced into the fan is provided on a vehicle front side with respect to the first blowout port and the second blowout port.

According to the aforementioned aspect of the invention, the introduction port for the air introduced into the fan is provided on the vehicle front side with respect to the first blowout port and the second blowout port. Thus, the air in front of the cabin can be sucked from the introduction port and caused to flow behind the cabin. In particular, in the case of the vehicle in which the blowout port of the air-conditioner is provided only in front of the cabin, the air cooled (warmed) by this air-conditioner can be efficiently caused to flow behind the cabin.

A vehicular air-conditioning device according to a seventh aspect of the invention is configured by modifying the vehicular air-conditioning device according to any one of the aforementioned fourth to sixth aspects of the invention such that the second blowout port is arranged at a position spaced apart from the air current blown out from the first blowout port.

According to the aforementioned aspect of the invention, the second blowout port is arranged apart from the air current blown out from the first blowout port. Thus, a swirling current is restrained from being produced through the convergence of the air current blown out from the second blowout port into the air current blown out from the first blowout port, in comparison with a case where the second blowout port is not spaced apart from the air current blown out from the first blowout port. As a result, a noise is restrained from being produced by this swirling current.

A vehicular air-conditioning device according to an eighth aspect of the invention is configured by modifying the vehicular air-conditioning device according to the aforementioned sixth aspect of the invention such that the introduction port is provided with a wall surface that is arranged in such a manner as to be inclined toward a direction of a ceiling of the cabin.

According to the aforementioned aspect of the invention, the wall surface configured as described above is provided. Thus, even if a noise of the fan is emitted from the introduction port to the cabin, this noise hits the ceiling of the cabin. In general, the ceiling of the cabin is provided with a roof head lining that is formed using a nonwoven fabric or the like with a sound absorbing effect. Thus, the noise of the fan emitted from the introduction port to the cabin hits the ceiling of the cabin (the roof head lining) to be thereby abated.

A vehicular air-conditioning device according to a ninth aspect of the invention is configured by modifying the vehicular air-conditioning device according to any one of the aforementioned fourth to eighth aspects of the invention such that the fan, whose axis extends along a vehicle vertical direction, is provided on the ceiling portion of the cabin.

In general, in order to increase the flow rate of the air current sent from the fan, the physical size of the fan tends to increase in the radial direction of the fan. However, according to the aforementioned aspect of the invention, the fan is arranged with the axis thereof extending along the vehicle vertical direction. Thus, the ceiling portion of the cabin is restrained from protruding toward the vehicle lower side, in comparison with a case where the fan is arranged with the axis thereof extending along a vehicle width direction or a vehicle longitudinal direction.

### Effects of the Invention

As described above, the vehicular air-conditioning device according to the first aspect of the invention has an excellent effect of making it possible to restrain the space of the cabin from decreasing.

The vehicular air-conditioning device according to the second aspect of the invention has an excellent effect of making it possible to adjust the wind direction of the air current blown out from the first blowout port to an arbitrary wind direction.

The vehicular air-conditioning device according to the third aspect of the invention has an excellent effect of making it possible to adjust the wind direction while directly feeling how the wind direction changes through the operation of the lever by the operator.

The vehicular air-conditioning device according to the fourth aspect of the invention has an excellent effect of making it possible to restrain the space of the cabin from decreasing in the vehicle vertical direction.

The vehicular air-conditioning device according to the fifth aspect of the invention has an excellent effect of making it possible to obtain the main current and the air current for adjusting the wind direction of this main current, without providing a plurality of fans.

The vehicular air-conditioning device according to the sixth aspect of the invention has an excellent effect of making it possible to efficiently cause the air whose temperature has been adjusted by the air-conditioner to flow behind the cabin.

The vehicular air-conditioning device according to each of the seventh and eighth aspects of the invention has an excellent effect of making it possible to restrain a noise from being produced through the operation of this vehicular air-conditioning device.

The vehicular air-conditioning device according to the ninth aspect of the invention has an excellent effect of making it possible to further restrain the space of the cabin from decreasing in the vehicle vertical direction.

### BRIEF DESCRIPTION OF THE DRAWINGS

[FIG. 1] FIG. 1 is an enlarged cross-sectional view showing a cross-section of a blowout body that is cut along a line 1-1 of FIG. 3.
[FIG. 2] FIG. 2 is a cross-sectional view showing a cross-section of a vehicle to which a vehicular air-conditioning device according to the present embodiment of the invention is applied, as viewed from beside the vehicle.
[FIG. 3] FIG. 3 is a plan view of the vehicular air-conditioning device according to the present embodiment of the invention, as viewed from below the vehicle.
[FIG. 4] FIG. 4 is an enlarged cross-sectional view showing a cross-section of the vehicular air-conditioning device and a cross-section of a ceiling portion of the vehicle, which are cut along a line 4-4 of FIG. 3.
[FIG. 5] FIG. 5 is an enlarged cross-sectional view showing a cross-section of the vehicular air-conditioning device and a cross-section of the ceiling portion of the vehicle, which are cut along a line 5-5 of FIG. 3.
[FIG. 6] FIG. 6 is an exploded perspective view showing a damper and a lever that are provided on the blowout body of the vehicular air-conditioning device according to the present embodiment of the invention.
[FIG. 7] FIG. 7 is a schematic view showing an air current flowing around a damper shown in FIG. 6.
[FIG. 8] FIG. 8 is a schematic view showing an air current flowing inside the blowout body.
[FIG. 9A] FIG. 9A is an enlarged cross-sectional view showing a cross-section of a blowout body according to a first modification example, in a manner equivalent to FIG. 1.
[FIG. 9B] FIG. 9B is an enlarged cross-sectional view showing, on an enlarged scale, a wind direction adjustment current blowout port in a blowout body according to a second modification example.
[FIG. 9C] FIG. 9C is an enlarged cross-sectional view showing a cross-section of a blowout body according to a third modification example, in a manner equivalent to FIG. 1.
[FIG. 9D] FIG. 9D is an enlarged cross-sectional view showing a cross-section of a blowout body according to a fourth modification example, in a manner equivalent to FIG. 1.
[FIG. 10A] FIG. 10A is an enlarged cross-sectional view showing a cross-section of a blowout body according to a first reference example, in a manner equivalent to FIG. 1.
[FIG. 10B] FIG. 10B is an enlarged cross-sectional view showing a cross-section of a blowout body according to a second reference example, in a manner equivalent to FIG. 1.
[FIG. 10C] FIG. 10C is an enlarged cross-sectional view showing a cross-section of a blowout body according to a third reference example, in a manner equivalent to FIG. 1.
[FIG. 10D] FIG. 10D is an enlarged cross-sectional view showing a cross-section of a blowout body according to a fourth reference example, in a manner equivalent to FIG. 1.
[FIG. 10E] FIG. 10E is an enlarged perspective view showing a cross-section of a blowout body according to a fifth reference example, in a manner equivalent to FIG. 1.
[FIG. 10F] FIG. 10F is an enlarged cross-sectional view showing a cross-section of a blowout body according to a sixth reference example, in a manner equivalent to FIG. 1.
[FIG. 10G] FIG. 10G is an enlarged perspective view showing a cross-section of a blowout body according to a seventh reference example, in a manner equivalent to FIG. 1.
[FIG. 11A] FIG. 11A is a plan view showing the arrangement of fans according to the first modification example as viewed from below the vehicle, in a manner equivalent to FIG. 2.
[FIG. 11B] FIG. 11B is a plan view showing the arrangement of a fan according to the second modification example as viewed from below the vehicle, in a manner equivalent to FIG. 2.
[FIG. 11C] FIG. 11C is a plan view showing the arrangement of a fan according to the third modification example as viewed from below the vehicle, in a manner equivalent to FIG. 2.
[FIG. 11D] FIG. 11D is a plan view showing the arrangement of fans according to the fourth modification example as viewed from below the vehicle, in a manner equivalent to FIG. 2.
[FIG. 12A] FIG. 12A is an enlarged perspective view showing a flow rate adjustment portion according to the first modification example.
[FIG. 12B] FIG. 12B is an enlarged perspective view showing the flow rate adjustment portion according to the first modification example.
[FIG. 12C] FIG. 12C is an enlarged cross-sectional view showing a cross-section cut along a line 12C-12C of FIG. 12A.
[FIG. 13A] FIG. 13A is an enlarged perspective view showing a flow rate adjustment portion according to the second modification example.
[FIG. 13B] FIG. 13B is an enlarged perspective view showing the flow rate adjustment portion according to the second modification example.
[FIG. 14] FIG. 14 is an enlarged perspective view showing a flow rate adjustment portion according to the third modification example.
[FIG. 15A] FIG. 15A is an enlarged perspective view showing a flow rate adjustment portion according to the fourth modification example.
[FIG. 15B] FIG. 15B is an enlarged perspective view showing the flow rate adjustment portion according to the fourth modification example.
[FIG. 15C] FIG. 15C is a cross-sectional view showing a cross-section cut along a line 15C-15C of FIG. 15B.
[FIG. 16A] FIG. 16A is an enlarged perspective view showing a flow rate adjustment portion according to a fifth modification example.
[FIG. 16B] FIG. 16B is an enlarged perspective view showing the flow rate adjustment portion according to the fifth modification example.

### MODE FOR CARRYING OUT THE INVENTION

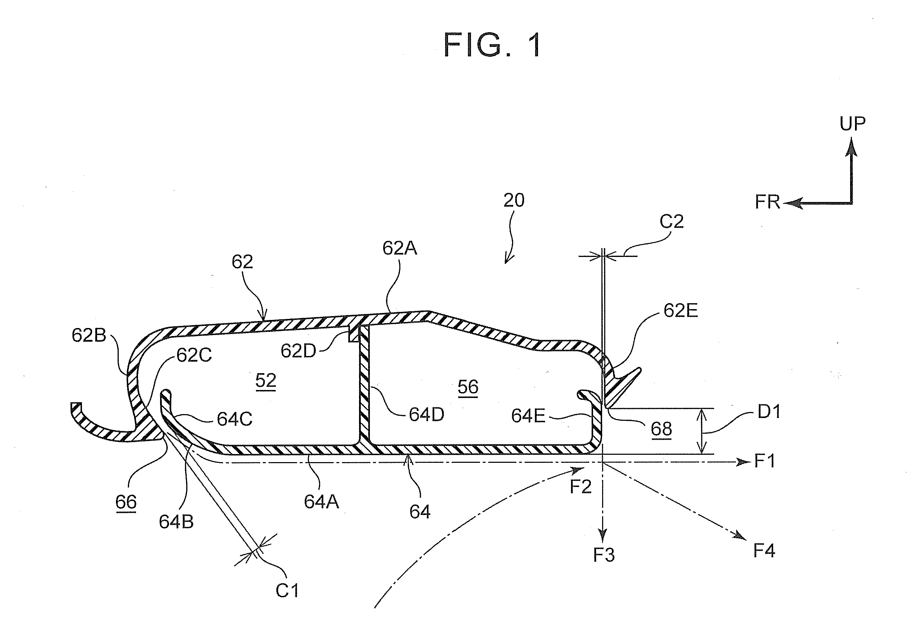

A vehicular air-conditioning device according to the embodiment of the invention will be described using FIGS. 1 to 6. Incidentally, in the following description, longitudinal, lateral and vertical directions are used to refer to longitudinal, lateral and vertical directions as viewed from a passenger seated in a vehicular seat respectively. Besides, arrows FR, UP, RH and LH, which are shown in the respective drawings where appropriate, denote a forward direction, an upward direction, a rightward direction and a leftward direction respectively. Besides, the direction of the arrow FR coincides with a vehicle forward direction, the direction of the arrow UP coincides with a vehicle upward direction, and the direction of the arrow RH and the arrow LH coincides with a vehicle width direction.

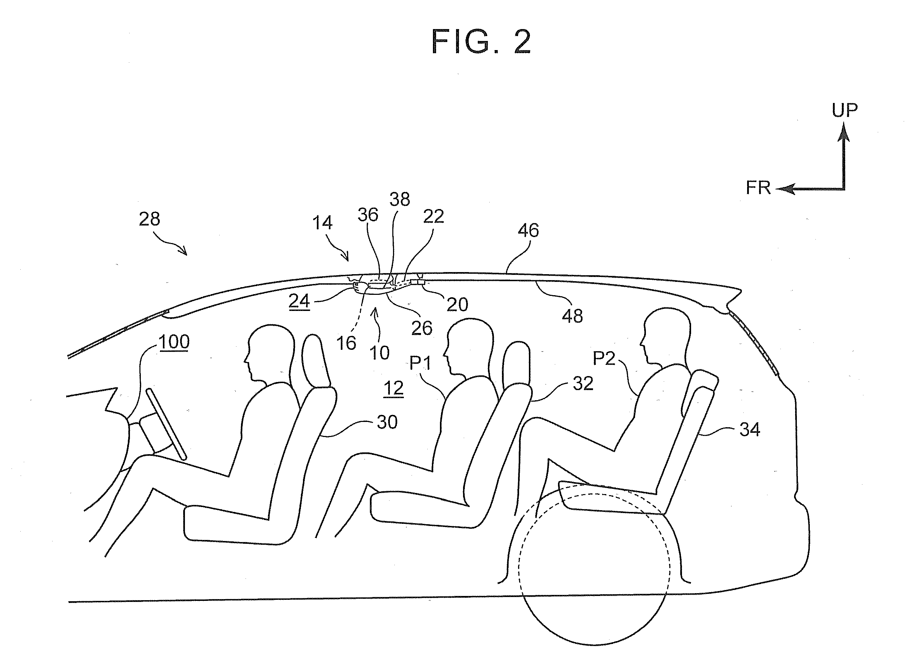

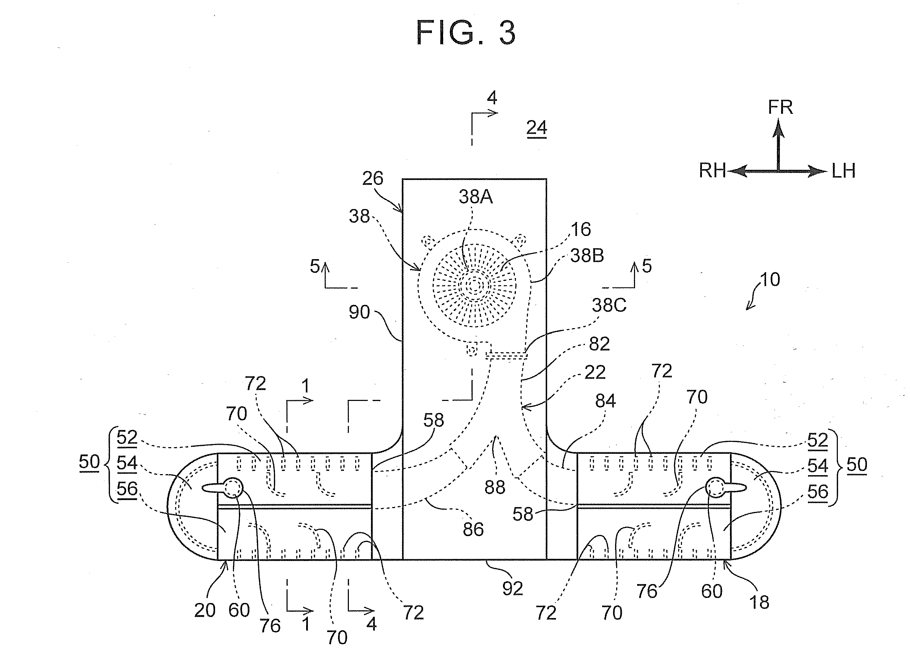

As shown in FIG. 2, a vehicular air-conditioning device 10 according to the present embodiment of the invention is an air blower that is provided at a ceiling portion 14 of a cabin 12. Concretely, as shown in FIG. 3, the vehicular air-conditioning device 10 is equipped with a fan 16 that produces an air current, blowout bodies 18 and 20 that are equipped with blowout ports from which the air current produced through the operation of this fan 16 is blown out toward the cabin 12, and a duct 22 for introducing the air current produced through the operation of the fan 16 into the blowout bodies 18 and 20. Besides, the vehicular air-conditioning device 10 is equipped with a fan cover 26 that covers the fan 16 and is fitted with an introduction port 24 for air introduced into this fan 16. Hereinafter, the cabin 12 of a vehicle 28 that is equipped with the vehicular air-conditioning device 10 according to the present embodiment of the invention will be described first, and then the fan 16, the blowout bodies 18 and 20, the duct 22, and the fan cover 26 will be described in this order.

### (Cabin 12)

As shown in FIG. 2, the vehicle 28 that is equipped with the vehicular air-conditioning device 10 according to the present embodiment of the invention is a so-called minivan-type vehicle with a riding capacity of seven persons. The cabin 12 of this vehicle 28 is provided with a first-row seat 30, a second-row seat 32, and a third-row seat 34. The first-row seat 30 is a driver seat or a front passenger seat. The second-row seat 32 is a bench-type seat in which three passengers can be seated. The third-row seat 34 is a bench-type seat in which two passengers can be seated.

### (Fan 16)

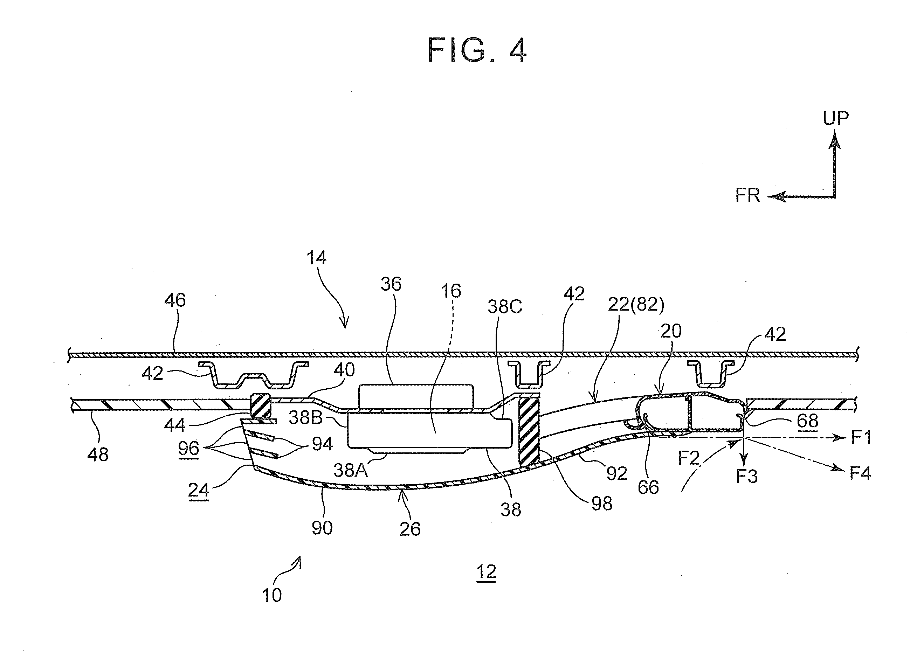

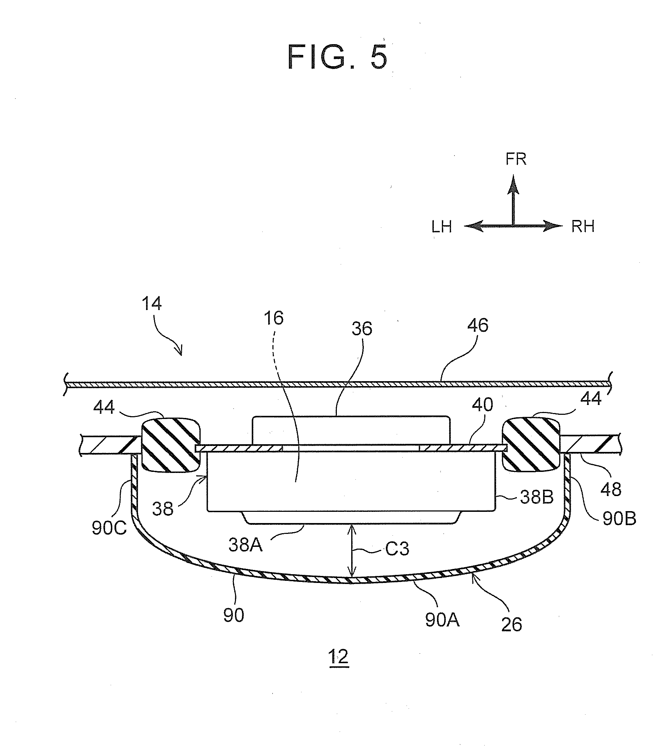

As shown in FIGS. 3 and 4, the fan 16 is a sirocco fan which has a multitude of blades radially outward thereof, and from which the air sucked into an axial center portion is blown out radially outward. This fan 16 is fixed to a shaft of a motor 36 whose axis extends along the vehicle vertical direction. Besides, the fan 16 is covered with a shroud 38 that has a circular opening portion 38A on the vehicle lower side and a peripheral wall portion 38B that extends along a circumferential direction of the fan 16. Furthermore, this shroud 38 is provided with a flange portion 38C to which the later-described duct 22 is coupled. The fan 16, the motor 36 and the shroud 38, which have been described above, are fixed to a roof reinforcement 42 that constitutes the ceiling portion 14 of the cabin 12, via a bracket 40. Besides, as shown in FIG. 4 and FIG. 5, a sealing material 44 is provided around the bracket 40. This sealing material 44 prevents the air (the air that has been cooled or warmed by outside air, sunlight or the like) between a roof panel 46 and a roof head lining 48, which constitute the ceiling portion 14 of the cabin 12, from being sucked into the fan 16.

### (Blowout Bodies 18 and 20)

As shown in FIG. 3, the blowout bodies 18 and 20 are provided on the left and right sides in the cabin 12 respectively. As shown in FIG. 2, the blowout bodies 18 and 20 are provided behind the first-row seat 30 and in front of the second-row seat 32 at the ceiling portion 14 of the cabin 12. Incidentally, the blowout body 18 and the blowout body 20 are configured substantially symmetrically in the vehicle width direction. Therefore, the blowout body 20 will be described herein, and the description of the blowout body 18 will be omitted with its components denoted by the same reference symbols as in the blowout body 20 respectively.

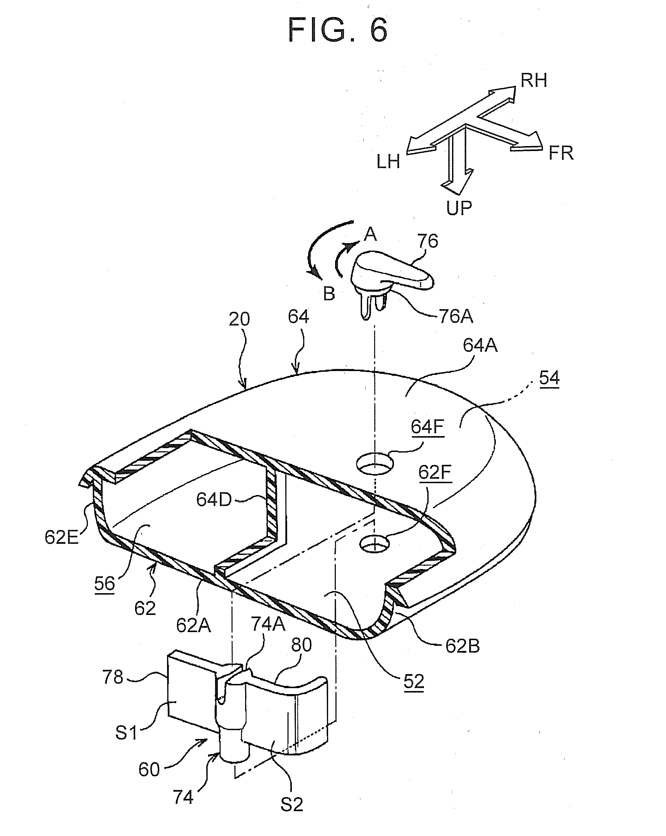

As shown in FIG. 3, the blowout body 20 is equipped with a substantially U-shaped flow channel 50 that opens inward in the vehicle width direction. Concretely, the blowout body 20 is equipped with a first flow channel 52 that extends outward in the vehicle width direction, a second flow channel 54 that is bent back substantially in the shape of U from an outer end of this first flow channel 52 in the vehicle width direction toward the vehicle rear side, and a third flow channel 56 that extends inward in the vehicle width direction via this second flow channel 54. Besides, an inner end of the first flow channel 52 in the vehicle width direction is an introduction port 58 into which an air current from the fan 16 is introduced. An inner end of the third flow channel 56 in the vehicle width direction is a closed end. Furthermore, as shown in FIG. 6, this blowout body 20 is provided with a damper 60 as a flow rate adjustment portion that adjusts the flow rate of an air current flowing from the first flow channel 52 into the third flow channel 56 via the second flow channel 54.

Besides, the configuration of the blowout body 20 will be described in more detail. As shown in FIG. 1, the blowout body 20 has a vertical two-division structure that is made up of an upper constituent 62 and a lower constituent 64, which are formed using a resinous material. The upper constituent 62 that constitutes an upper portion of this blowout body 20 is equipped with an upper wall portion 62A that extends in the vehicle longitudinal direction and the vehicle width direction, and a front wall portion 62B that extends in a bent manner downward from a front end of this upper wall portion 62A. Besides, the upper constituent 62 is equipped with an inclined wall portion 62C that extends in an inclined manner from a lower end of the front wall portion 62B toward the vehicle rear side. Furthermore, the upper constituent 62 is equipped with a rib 62D that protrudes from an intermediate portion of the upper wall portion 62A in the vehicle longitudinal direction toward the vehicle lower side and extends in the vehicle width direction, and a rear wall portion 62E that extends from a rear end of the upper wall portion 62A toward the vehicle lower side.

Besides, the lower constituent 64 that constitutes a lower portion of the blowout body 20 is equipped with a lower wall portion 64A that extends in the vehicle longitudinal direction and the vehicle width direction, and an inclined wall portion 64B that extends in a bent state from a front end of this lower wall portion 64A toward a vehicle upper side. Furthermore, the lower constituent 64 is equipped with a front wall portion 64C that is bent from a front end of the inclined wall portion 64B toward the vehicle upper side and is arranged apart from a wall surface of the inclined wall portion 62C of the upper constituent 62 on the vehicle rear side by a predetermined distance C1. Furthermore, the lower constituent 64 is equipped with a partition portion 64D that protrudes from an intermediate portion of the lower wall portion 64A in the vehicle longitudinal direction toward the vehicle upper side and has a distal end extending along the rib 62D of the upper constituent 62. Besides, the lower constituent 64 is equipped with a rear wall portion 64E that extends from a rear end of the lower wall portion 64A toward the vehicle upper side and has a distal end arranged apart from a wall surface of the rear wall portion 62E of the upper constituent 62 on the vehicle front side by a predetermined distance C2.

The first flow channel 52 is formed by the upper wall portion 62A, the front wall portion 62B, and the inclined wall portion 62C of the upper constituent 62 described above, and the partition portion 64D, the lower wall portion 64A, the inclined wall portion 64B, and the front wall portion 64C of the lower constituent 64 described above. Besides, the third flow channel 56 is formed by the upper wall portion 62A and the rear wall portion 62E of the upper constituent 62, and the partition portion 64D, the lower wall portion 64A and the rear wall portion 64E of the lower constituent 64. Furthermore, the second flow channel 54 (see FIG. 3) is formed by the upper wall portion 62A of the upper constituent 62, the lower wall portion 64A of the lower constituent 64, and the like.

Besides, a main current blowout port 66 as a first blowout port that opens diagonally toward the vehicle rear side and is formed in the shape of an elongate hole with its longitudinal direction coincident with the vehicle width direction is formed between the inclined wall portion 62C of the upper constituent 62 and the front wall portion 64C of the lower constituent 64. Furthermore, a wind direction adjustment current blowout port 68 as a second blowout port that opens toward the vehicle lower side and is formed in the shape of an elongate hole with its longitudinal direction coincident with the vehicle width direction is formed between the rear wall portion 62E of the upper constituent 62 and the rear wall portion 64E of the lower constituent 64. As a result, an air current that has flowed from the fan 16 into the blowout body 20 via the duct 22 can be blown out from the main current blowout port 66 and the wind direction adjustment current blowout port 68. Besides, as shown in FIG. 3, the lower wall portion 64A of the lower constituent 64 is provided with guide ribs 70 and 72 for introducing the air current that has flowed from the fan 16 into the blowout body 20 via the duct 22, into the main current blowout port 66 and the wind direction adjustment current blowout port 68. Besides, as shown in FIG. 1, the present embodiment of the invention adopts a configuration in which the main current blowout port 66 is provided upstream of the air current introduced into the blowout body 20, and the wind direction adjustment current blowout port 68 is provided downstream of this air current. Furthermore, in the present embodiment of the invention, the wind direction adjustment current blowout port 68 is arranged such that an air current F3 blown out from the wind direction adjustment current blowout port 68 intersects with an air current F1 that is blown out from the main current blowout port 66 and flows along the lower wall portion 64A of the lower constituent 64. Besides, this wind direction adjustment current blowout port 68 is arranged apart from the air current F1 by a distance D1 (the wind direction adjustment current blowout port 68 is arranged on the vehicle upper side with respect to the lower wall portion 64A of the lower constituent 64 by the distance D 1.

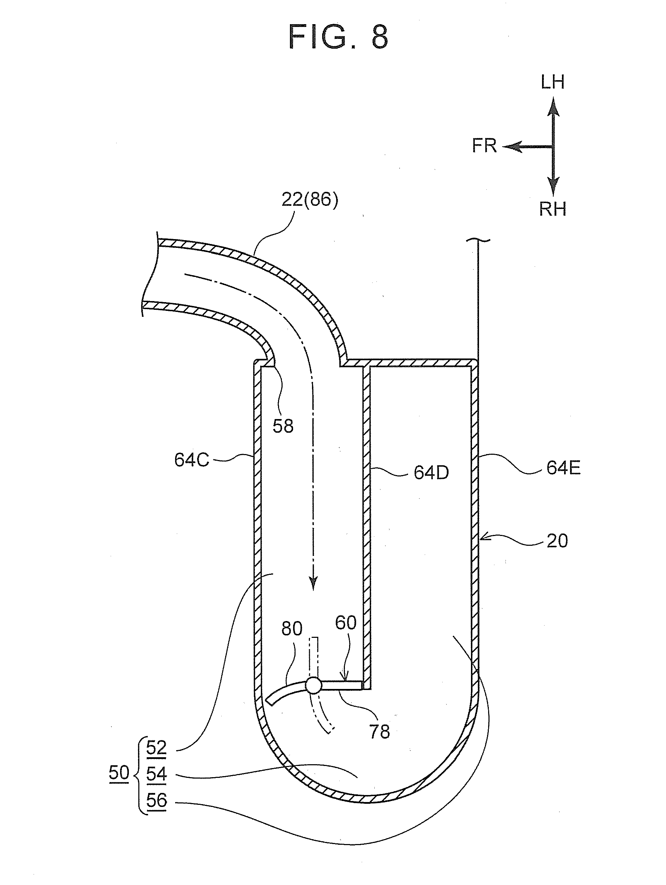

FIG. 6 is an exploded perspective view showing a state where the damper 60 that is provided at a border between the first flow channel 52 and the second flow channel 54 in the blowout body 20 is at a closed position. As shown in this drawing, the damper 60 is equipped with a substantially columnar shaft portion 74. One end (an end on the vehicle upper side) of this shaft portion 74 is loosely inserted in a circular pivotal support hole 62F that is provided through the upper wall portion 62A of the upper constituent 62. Besides, a connection portion 74A for a lever 76 is formed at the other end (the end on the vehicle lower side) of the shaft portion 74. The lever 76 is connected to this connection portion 74A, and a shaft portion 76A of the lever 76 is loosely inserted in a circular pivotal support hole 64F that is provided through the lower wall portion 64A of the lower constituent 64. As a result, the shaft portion 74 is configured to be rotated by operating the lever 76 (by moving the lever 76 in directions of an arrow A and an arrow B). Besides, the damper 60 is equipped with a first flap portion 78 and a second flap portion 80, which are formed integrally with the shaft portion 74 and extend radially outward of this shaft portion 74. The first flap portion 78 is formed substantially in the shape of a rectangular plate such that an upper end thereof, an end thereof on the vehicle rear side, and a lower end thereof extend along the upper wall portion 62A of the upper constituent 62, the partition portion 64D of the lower constituent 64, and the lower wall portion 64A of the lower constituent 64. Besides, the second flap portion 80 is formed substantially in the shape of a rectangular plate such that an upper end thereof and a lower end thereof extend along the upper wall portion 62A of the upper constituent 62 and the lower wall portion 64A of the lower constituent 64 respectively. Furthermore, a distal end of the second flap portion 80 is formed in such a manner as to be bent outward in the vehicle width direction. Besides, the distal end of the second flap portion 80 is formed concentrically with an outer wall of the second flow channel 54 in a state where the damper 60 is at an open position (see FIG. 8). Furthermore, an area S1 of an outer surface of the first flap portion 78 and an area S2 of an outer surface of the second flap portion 80 are set substantially equal to each other.

Besides, the lever 76 is arranged at such a position that the air currents F1 and F3 blown out from the main current blowout port 66 and the wind direction adjustment current blowout port 68 respectively do not hit the lever 76. More specifically, the lever 76 is arranged at a position that is offset from a position opposed to the main current blowout port 66 and the wind direction adjustment current blowout port 68 in such a direction (the vehicle width direction) as to intersect with both the blowout direction of the main current blowout port 66 and the blowout direction of the wind direction adjustment current blowout port 68.

### (Duct 22)

As shown in FIG. 3, the duct 22 is a Y-shaped branch pipe that branches off in the vehicle lateral direction. Concretely, the duct 22 is equipped with a first duct portion 82 that extends in the vehicle longitudinal direction. A proximal end side (the vehicle front side) of this first duct portion 82 is coupled to the flange portion 38C of the shroud 38. Besides, the duct 22 is equipped with a second duct portion 84 that extends while branching off leftward in the vehicle width direction from a distal end of the first duct portion 82, and a third duct portion 86 that extends while branching off rightward in the vehicle width direction from the distal end of the first duct portion 82. Furthermore, distal ends of the second duct portion 84 and the third duct portion 86 are connected to the introduction port 58 of the blowout body 18 and the introduction port 58 of the blowout body 20 respectively. Besides, the distal end of this first duct portion 82 branches off into the second duct portion 84 and the third duct portion 86, whereby the opening area of the distal end side of the first duct portion 82 gradually increases toward the vehicle rear side. However, in the present embodiment of the invention, the change in this opening area is set as small as possible. Furthermore, in the present embodiment of the invention, a joint portion 88 between the second duct portion 84 and the third duct portion 86 is formed in such a manner as to protrude toward the vehicle front side and narrow toward the vehicle front side.

### (Fan Cover 26)

As shown in FIG. 4, the fan cover 26 is formed substantially in the shape of a box in such a manner as to cover the fan 16, the motor 36 and the shroud 38, which are fixed to the ceiling portion of the cabin 12 via the bracket 40, and cover the aforementioned duct 22. Concretely, the fan cover 26 is equipped with a fan cover portion 90 that covers the fan 16, the motor 36 and the shroud 38, and a duct cover portion 92 that covers the duct 22.

As shown in FIG. 5, the fan cover portion 90 opens toward the vehicle upper side, and is formed with a substantially U-shaped cross-section as viewed from a region in front of the vehicle. Besides, the fan cover portion 90 is equipped with a bottom wall portion 90A that extends in the vehicle longitudinal direction and the vehicle width direction, and a right lateral wall portion 90B and a left lateral wall portion 90C that extend in a bent manner from both right and left ends of this bottom wall portion 90A toward the vehicle upper side respectively. Besides, the bottom wall portion 90A of the fan cover portion 90 is arranged apart from the opening portion 38A that is formed through a lower portion of the shroud 38 by a distance C3 in a state where the fan cover 26 is attached to the ceiling portion 14 of the cabin 12. Incidentally, this distance C3 is appropriately set in consideration of the flow rate of air sucked from the opening portion 38A formed through the lower portion of the shroud 38, the head clearance of the cabin 12, and the like.

Besides, as shown in FIG. 4, the introduction port 24 for air introduced into the fan 16 is formed at a front end of the fan cover portion 90. This introduction port 24 is formed substantially in the shape of a rectangle whose longitudinal direction coincides with the vehicle width direction as viewed from the region in front of the vehicle, and is arranged slightly behind a region above the first-row seat 30 as shown in FIG. 2. Besides, as shown in FIG. 4, the introduction port 24 is provided with a plurality of (two in the present embodiment of the invention) louvers 94 along the vehicle vertical direction. Each of these louvers 94 is formed in the shape of a plate, and a front end thereof is fixed to a peripheral edge portion of the introduction port 24 while being inclined toward the vehicle upper side. As a result, the introduction port 24 is partitioned in the height direction by the louvers 94. Besides, respective introduction openings 96 that are formed by being partitioned by these louvers 94 open toward the roof head lining 48.

Besides, a sealing material 98 that can be penetrated by the first duct portion 82 of the duct 22 is provided at a rear end of the fan cover portion 90. A space covered by the fan cover portion 90 and a space covered by the duct cover portion 92 are partitioned from each other by this sealing material 98. The fan cover portion 90 described above is fixed to the roof head lining 48 via a clip (not shown) or the like.

Besides, as is the case with the aforementioned fan cover portion 90, the duct cover portion 92 opens toward the vehicle upper side, and is formed with a substantially U-shaped cross-section as viewed from the region in front of the vehicle. Besides, as shown in FIG. 3, a front end of the duct cover portion 92 is formed in such a manner as to link the blowout body 18 and the blowout body 20, which are provided at the ceiling portion 14 of the cabin 12, with each other in the vehicle width direction, and is fixed to the blowout bodies 18 and 20 via a clip (not shown) or the like.

(Operation and Effect of the Present Embodiment)

Next, the operation and effect of the present embodiment of the invention will be described.

As shown in FIG. 4, when the fan 16 rotates through rotation of the motor 36, the air in front of the cabin 12 is introduced from the introduction port 24 that is formed at the front end of the fan cover 26. Then, the air introduced from the introduction port 24 is introduced into an axial center portion of the fan 16 from the opening portion 38A that is formed through the lower portion of the shroud 38. Then, as shown in FIG. 3, the air introduced into the axial center portion of the fan 16 flows into the first duct portion 82 of the duct 22, and then flows while branching off into the second duct portion 84 and the third duct portion 86. Then, the air current that has flowed into the second duct portion 84 and the third duct portion 86 flows into the blowout body 18 and the blowout body 20. Incidentally, as described above, the blowout body 18 and the blowout body 20 are formed substantially symmetrically in the vehicle width direction. In this case, therefore, the operation and effect of the blowout body 20 will be described, and the description of the operation and effect of the blowout body 18 will be omitted.

As shown in FIG. 1, part of the air current that has flowed into the first flow channel 52 of the blowout body 20 flows along the guide ribs 70 and 72 (see FIG. 3), and then is blown out from the main current blowout port 66. The air current F1 blown out from this main current blowout port 66 flows toward the vehicle rear side along the lower wall portion 64A of the lower constituent 64. Besides, the air below this air current F1 is engulfed (an air current of this engulfed air will be referred to hereinafter as "an air current F2") by the air current F1 that has flowed along the lower wall portion 64A. As a result, an air current whose flow rate exceeds a flow rate of the air blown out from the main current blowout port 66 (an air current whose amount is the sum of the amount of the air current F1 and the amount of the air current F2) flows in the same direction.

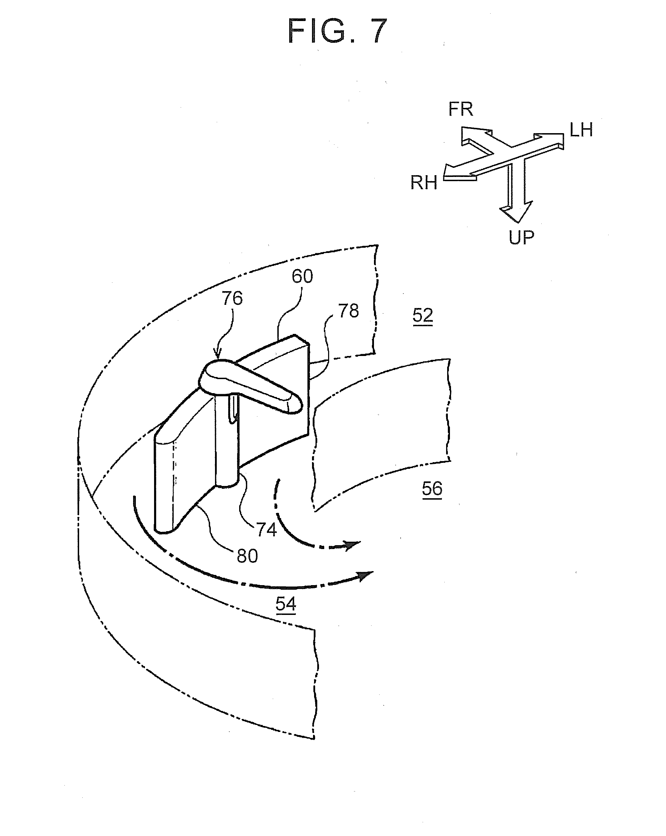

FIG. 7 shows an air current that flows through the second flow channel 54 when the damper 60 is in a fully open state. As shown in this drawing, another part of the air current that has flowed into the first flow channel 52 of the blowout body 20 flows into the third flow channel 56 through the second flow channel 54.

As shown in FIG. 1, the air current that has flowed into the third flow channel 56 of the blowout body 20 flows along the guide ribs 70 and 72 (see FIG. 3), and then is blown out from the wind direction adjustment current blowout port 68. The air current F3 blown out from this wind direction adjustment current blowout port 68 flows toward the vehicle lower side. Then, the air current F3 blown out from the wind direction adjustment current blowout port 68 converges from beside the air current F1 blown out from the main current blowout port 66 and the air current F2 produced by being engulfed by this air current F1. As a result, the wind direction of the air current F1 blown out from the main current blowout port 66 (and the air current F2 of the air engulfed by this air current F1) is changed (the air current whose wind direction has been changed will be referred to hereinafter as "an air current F4"). In the present embodiment of the invention, when the damper 60 is in a fully open state, the air current F4 flows toward a passenger P1 (see FIG. 2) seated in the second-row seat 32.

Besides, as shown in FIG. 8, in the case where the damper 60 is in a fully closed state, the air current that has flowed into the first flow channel 52 is unlikely to flow into the third flow channel 56 through the second flow channel 54. Thus, as shown in FIG. 1, the flow rate of the air current F1 blown out from the main current blowout port 66 increases, and on the contrary, the flow rate of the air current F3 blown out from the wind direction adjustment current blowout port 68 decreases. As a result, the air current F1 blown out from the main current blowout port 66 (and the air current F2 of the air engulfed by this air current F1) is not very susceptible to the influence of the air current F3 blown out from the wind direction adjustment current blowout port 68, and flows toward the vehicle rear side. Besides, in the present embodiment of the invention, when the damper 60 is in a fully closed state, the air current F4 flows toward a passenger P2 (see FIG. 2) seated in the third-row seat 34.

As described above, in the present embodiment of the invention, the wind direction of the air current F1 blown out from the main current blowout port 66 (and the air current F2 of the air engulfed by this air current F1) can be steplessly changed by operating the lever 76 that is connected to the damper 60. Besides, in the present embodiment of the invention, there is no need to separately provide the ceiling portion 14 of the cabin 12 with a register or the like for adjusting the wind direction. As a result, the space of the cabin 12 can be restrained from decreasing.

Besides, as shown in FIG. 3, in the present embodiment of the invention, the lever 76 for operating the damper 60 is arranged at such a position that the air currents F1 and F3 blown out from the main current blowout port 66 and the wind direction adjustment current blowout port 68 respectively do not hit the lever 76. Thus, in the case where the operator (e.g., the passenger P1 seated in the second-row seat 32 or the passenger P2 seated in the third-row seat 34) manually operates this lever 76, the air currents F1 and F3 blown out from the main current blowout port 66 and the wind direction adjustment current blowout port 68 respectively do not directly hit the hand of the operator. In other words, the hand of this operator does not block the air currents F1 and F3 blown out from the main current blowout port 66 and the wind direction adjustment current blowout port 68 respectively. As a result, the operator can adjust the wind direction while directly feeling how the wind direction changes.

Furthermore, in the present embodiment of the invention, the main current blowout port 66 is provided upstream of the air current introduced into the blowout body 20, and the wind direction adjustment current blowout port 68 is provided downstream of this air current. Thus, the pressure of the air current F1 blown out from the main current blowout port 66 can be made higher than the pressure of the air current F3 blown out from the wind direction adjustment current blowout port 68. That is, in the present embodiment of the invention, a high-pressure air current (the air current F1 blown out from the main current blowout port 66) and a low-pressure air current (the wind direction adjustment current F3 for adjusting the wind direction of the air current F1 blown out from the main current blowout port 66 and the like) can be obtained without providing a plurality of fans.

Besides, as shown in FIG. 4, in the present embodiment of the invention, the introduction port 24 for the air introduced into the fan 16 is provided on the vehicle front side with respect to the main current blowout port 66 and the wind direction adjustment current blowout port 68. Thus, the air in front of the cabin 12 can be sucked from the introduction port 24, and this air can be caused to flow behind the cabin 12. As shown in FIG. 2, in the case of the vehicle 28 according to the present embodiment of the invention in which a blowout port 100 of the air-conditioner is provided only in front of the cabin 12, the air cooled (warmed) by this air-conditioner can be efficiently caused to flow behind the cabin 12.

Furthermore, as shown in FIG. 1, in the present embodiment of the invention, the wind direction adjustment current blowout port 68 is arranged on the vehicle upper side with respect to the lower wall portion 64A of the lower constituent 64 by the distance D1. Thus, a swirling current is restrained from being produced through the convergence of the air current F3 blown out from the wind direction adjustment current blowout port 68 into the air current F1 blown out from the main current blowout port 66. That is, in the present embodiment of the invention, a noise can be restrained from being produced by this swirling current.

Besides, as shown in FIG. 4, in the present embodiment of the invention, the introduction openings 96 that are formed through the partitioning of the introduction port 24 by the louvers 94 are formed in such a manner as to open toward the direction of the roof head lining 48. Thus, even if a noise of the fan 16 is emitted from this introduction port 24 to the cabin 12, this noise hits the roof head lining 48. In the present embodiment of the invention, the roof head lining 48 that constitutes the ceiling portion 14 of the cabin 12 is formed using a nonwoven fabric with a sound absorbing effect. As a result, the present embodiment of the invention can cause the roof head lining 48 to absorb the noise of the fan 16 emitted from the introduction port 24 to the cabin 12.

Furthermore, as shown in FIG. 1, in the present embodiment of the invention, the upper wall portion 62A of the upper constituent 62 that constitutes the upper portion of the blowout body 20 is provided with the rib 62D that extends in the vehicle width direction, and the lower wall portion 64A of the lower constituent 64 that constitutes the lower portion of the blowout body 20 is provided with the partition portion 64D that extends in the vehicle width direction. Thus, when molding the upper constituent 62 and the lower constituent 64, this upper constituent 62 and this lower constituent 64 can be restrained from being deformed to warp in the vehicle width direction.

Besides, as shown in FIG. 3, in the present embodiment of the invention, the opening area of the first duct portion 82 on the distal end side thereof gradually increases toward the vehicle rear side, and the change in this opening area is set as small as possible. Furthermore, in the present embodiment of the invention, the joint portion 88 between the second duct portion 84 and the third duct portion 86 is formed in such a manner as to protrude toward the vehicle front side and narrow toward the vehicle front side. Thus, the air current in this region can be restrained from being detached, and hence, a noise and a pressure loss can be restrained from being produced through the detachment of the air current.

Furthermore, as shown in FIG. 6, in the present embodiment of the invention, the area S1 of the outer surface of the first flap portion 78 and the area S2 of the outer surface of the second flap portion 80 are set substantially equal to each other. Thus, a moment that is produced around the shaft portion 74 by the pressure applied to the outer surface of the first flap portion 78 is counterbalanced by a moment that is produced around the shaft portion 74 by the pressure applied to the outer surface of the second flap portion 80. As a result, the damper 60 can be held at an arbitrary position between the fully-open position and the fully-closed position, without separately providing fixation means for fixing rotation of the shaft portion 74 of the damper 60.

Incidentally, although the example in which the damper 60 is provided at the border between the first flow channel 52 and the second flow channel 54 in the blowout body 20 has been described in the present embodiment of the invention, the invention is not limited thereto. It is also acceptable to adopt a configuration in which the damper 60 is not provided.

### (Modification Examples of Blowout Body 20)

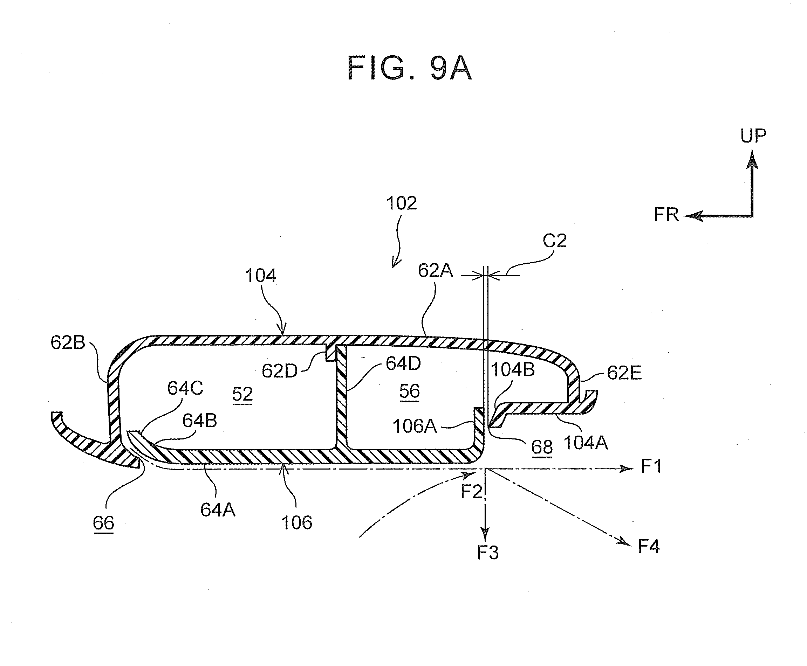

Next, modification examples of the blowout body 20 according to the aforementioned embodiment of the invention will be described using FIGS. 9A to 9D. Incidentally, those members and regions which are the same as in the aforementioned embodiment of the invention will be denoted by the same reference symbols respectively, and the description thereof will be omitted.

### (Blowout Body 102 According to First Modification Example)

As shown in FIG. 9A, the blowout body 102 according to the present modification example is characterized in that the wind direction adjustment current blowout port 68 is offset toward the vehicle front side in comparison with the blowout body 20 according to the aforementioned embodiment of the invention. Concretely, an upper constituent 104 that constitutes an upper portion of a blowout body 102 is equipped with an intermediate wall portion 104A that extends from the lower end of the rear wall portion 64E toward the vehicle front side, and an inclined wall portion 104B that extends in an inclined manner from a front end of this intermediate wall portion 104A toward the vehicle lower side. Besides, a lower constituent 106 that constitutes a lower portion of the blowout body 102 is equipped with a rear wall portion 106A that extends from the rear end of the lower wall portion 64A toward the vehicle upper side and has a distal end arranged apart from a wall surface of the inclined wall portion 104B of the upper constituent 104 on the vehicle front side by the predetermined distance C2.

In the blowout body 102 described above as well, an operation and effect similar to those of the aforementioned embodiment of the invention can be obtained.

### (Blowout Body 108 According to Second Modification Example)

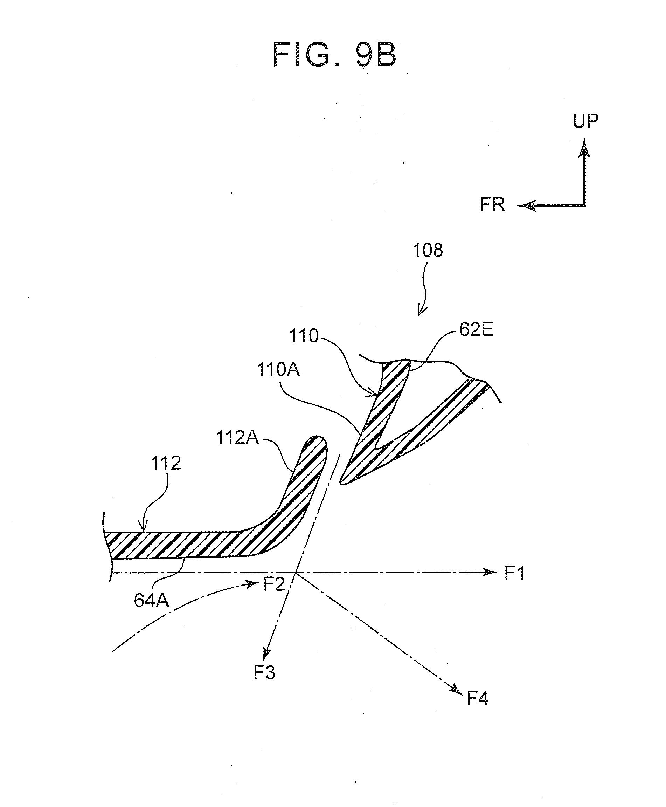

As shown in FIG. 9B, a blowout body 108 according to the present modification example is characterized in that the wind direction adjustment current blowout port 68 is formed in such a manner as to open toward the vehicle front side and diagonally toward the vehicle lower side in comparison with the blowout body 20 according to the aforementioned embodiment of the invention. Concretely, an upper constituent 110 that constitutes an upper portion of the blowout body 108 is equipped with an inclined portion 110A that is formed such that the lower end of the rear wall portion 62E is inclined toward the vehicle front side and diagonally toward the vehicle lower side. Besides, a lower constituent 112 that constitutes a lower portion of the blowout body 108 is equipped with a rear wall portion 112A that is inclined from the rear end of the lower wall portion 64A toward the vehicle rear side and diagonally toward the vehicle upper side and has a distal end that is arranged along a surface of the inclined portion 110A on the vehicle front side.

The air current F3 can be blown out toward the vehicle front side and diagonally toward the vehicle lower side from the wind direction adjustment current blowout port 68 of the blowout body 108 described above. As a result, in the blowout body 108 according to the present modification example, the wind direction of the air current F1 blown out from the main current blowout port 66 can be adjusted over a wider range.

### (Blowout Body 114 According to Third Modification Example)

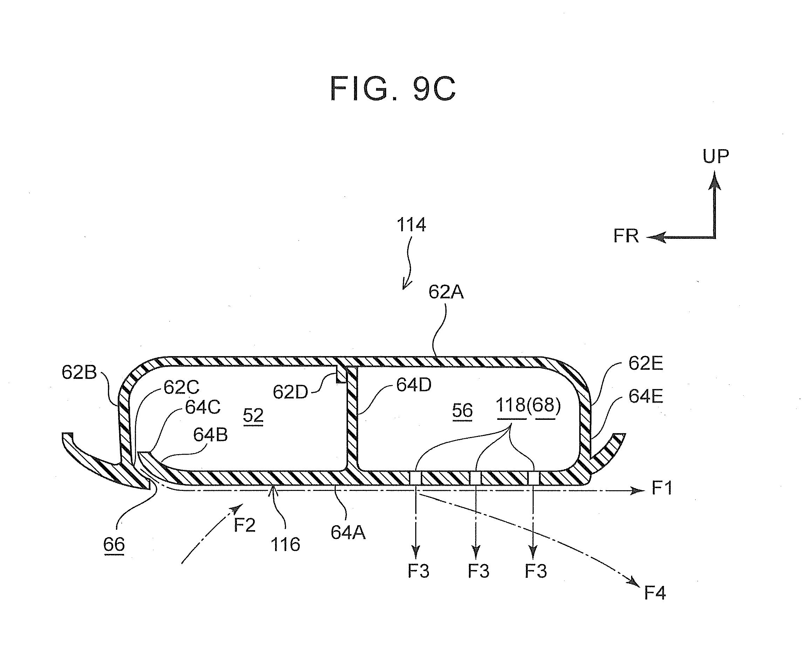

As shown in FIG. 9C, the blowout body 114 according to the present modification example is characterized in that the wind direction adjustment current blowout port 68 is formed by a plurality of circular through-holes 118 that are formed through the lower wall portion 64A of a lower constituent 116 that constitutes a lower portion of this blowout body 114. Concretely, the through-holes 118 are formed in an intermediate region of the lower wall portion 64A of the lower constituent 116 in the vehicle longitudinal direction in the third flow channel 56, and are provided at intervals of a predetermined distance along the vehicle longitudinal direction and the vehicle width direction (in the present embodiment of the invention, the through-holes 118 are disposed in three rows in the vehicle longitudinal direction).

In the blowout body 114 according to the present modification example described above, the wind direction of the air current F1 blown out from the main current blowout port 66 (and the air current F2 of the air engulfed by this air current F1) can be adjusted by the air current F3 blown out from the wind direction adjustment current blowout port 68 that is formed by the through-holes 118.

### (Blowout Body 120 According to Fourth Modification Example)

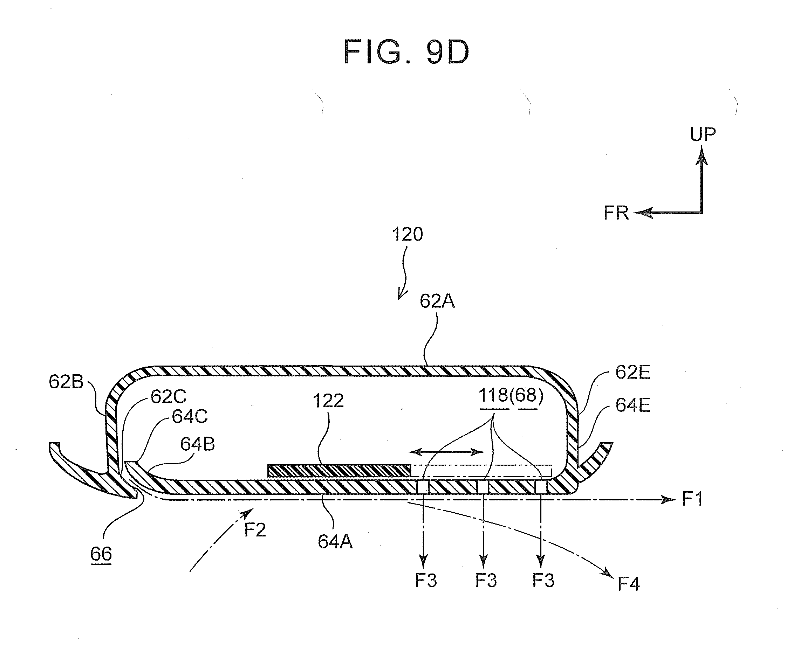

As shown in FIG. 9D, the blowout body 120 according to the present modification example is characterized by being not provided with the partition portion 64D that partitions the first flow channel 52 and the third flow channel 56 from each other, and by being provided with an adjustment plate 122 as a flow rate adjustment portion that adjusts the flow rate of the air current F3 blown out from the wind direction adjustment current blowout port 68 by closing the through-holes 118 that form the wind direction adjustment current blowout port 68, in comparison with the blowout body 114 according to the aforementioned third modification example. Concretely, the adjustment plate 122 is provided on the vehicle upper side of the lower wall portion 64A, and is slidably supported in the vehicle longitudinal direction by a guide rail (not shown). Furthermore, a lever (not shown) is connected to the adjustment plate 122. The adjustment plate 122 is configured to slide in the vehicle longitudinal direction through the operation of this lever.

In the blowout body 120 according to the present modification example, the flow rate of the air current F3 blown out from the through-holes 118 that form the wind direction adjustment current blowout port 68 is adjusted by operating the lever (the adjustment plate 122) in the vehicle longitudinal direction. As a result, the wind direction of the air current F1 blown out from the main current blowout port 66 can be adjusted.

### (Reference Examples of Blowout Body)

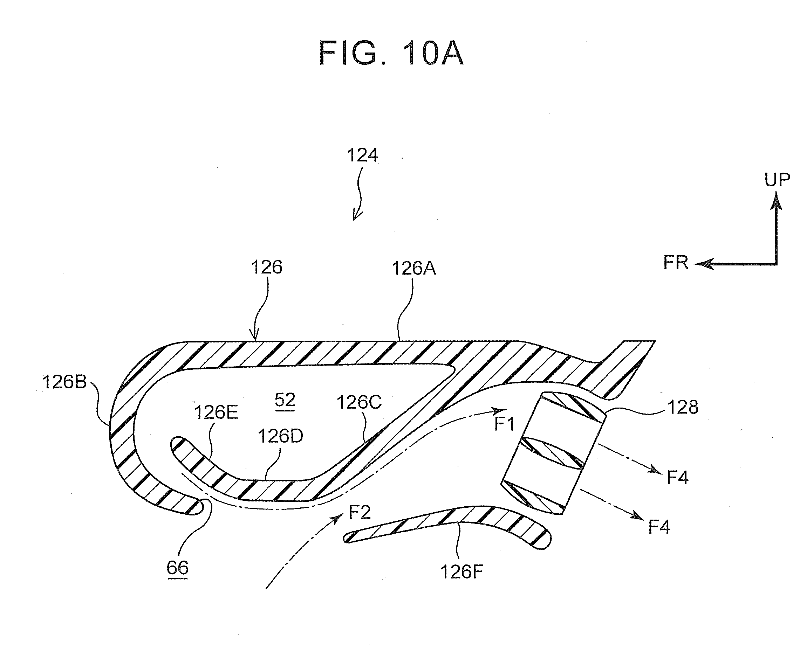

Next, reference examples of the blowout body according to the aforementioned embodiment of the invention will be described using FIGS. 10A to 10G. Incidentally, those members and regions which are the same as in the aforementioned embodiment of the invention and the like will be denoted by the same reference symbols respectively, and the description thereof will be omitted.

### (Blowout Body 124 According to First Reference Example)

As shown in FIG. 10A, the blowout body 124 according to the present reference example is characterized by being equipped with a blowout body main body portion 126 that has the main current blowout port 66 and the first flow channel 52, and a register 128 that is supported by this blowout body main body portion 126. Concretely, the blowout body main body portion 126 is equipped with an upper wall portion 126A that extends in the vehicle longitudinal direction and the vehicle width direction, and a front wall portion 126B that is bent from a front end of this upper wall portion 126A toward the vehicle lower side and has a distal end that extends in an inclined manner toward the vehicle rear side. Besides, the blowout body main body portion 126 is equipped with a first inclined wall portion 126C that extends in an inclined manner from a rear end of the upper wall portion 126A toward the vehicle front side and diagonally toward the vehicle lower side, and a lower wall portion 126D that extends in a bent manner from a lower end of this first inclined wall portion 126C toward the vehicle front side. Furthermore, the blowout body main body portion 126 is equipped with a second inclined wall portion 126E that extends in an inclined manner from a front end of the lower wall portion 126D toward the vehicle upper side and is arranged along a distal end of the front wall portion 126B. The main current blowout port 66 that opens diagonally toward the vehicle rear side is formed between this second inclined wall portion 126E and this front wall portion 126B.

Furthermore, a guide wall 126F that guides the air current F1, which is blown out from the main current blowout port 66 and flows along the lower wall portion 126D and the first inclined wall portion 126C of the blowout body main body portion 126, toward the register 128 is provided below the first inclined wall portion 126C. The register 128 is arranged between a front end of this guide wall 126F and a front end of the blowout body main body portion 126. This register 128 is turnably supported with the axis thereof extending along the vehicle width direction.

The blowout body 124 according to the present reference example described above makes it possible to adjust the wind direction of the air current F1 that is blown out from the main current blowout port 66 and flows along the lower wall portion 126D and the first inclined wall portion 126C of the blowout body main body portion 126 (and the air current F2 of the air engulfed by this air current F1) by turning the register 128.

### (Blowout Body 130 According to Second Reference Example)

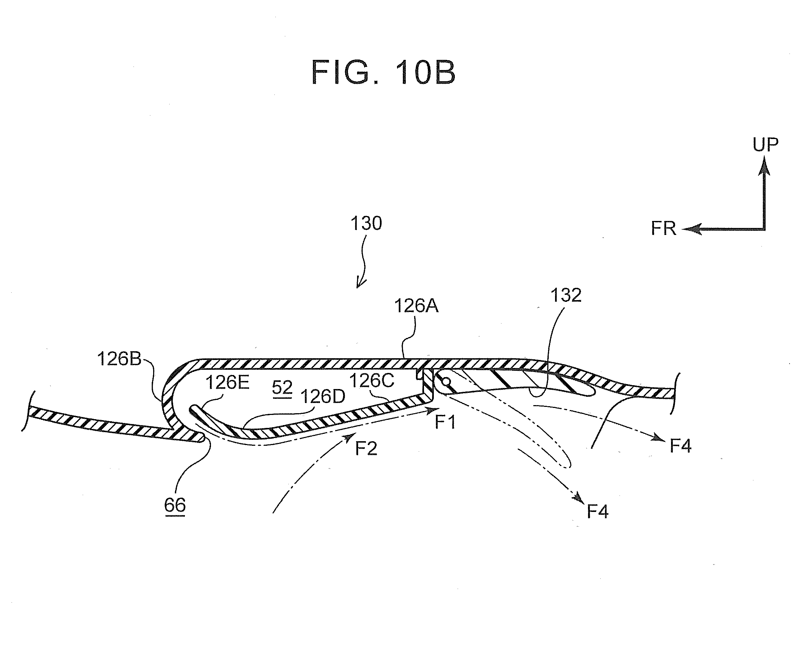

As shown in FIG. 10B, the blowout body 130 according to the present reference example is characterized by being provided with a flap 132 for adjusting the wind direction instead of the register 128 of the blowout body 124 according to the aforementioned first reference example. Concretely, the flap 132 is formed in the shape of a plate extending in the vehicle width direction, and is arranged at a rear end of the blowout body main body portion 126. Besides, a proximal end of this flap 132 is pivotally supported by bearing means (not shown) whose axis extends along the vehicle width direction. As a result, the flap 132 can turn in the vehicle vertical direction.

The blowout body 130 according to the present reference example described above makes it possible to adjust the wind direction of the air current F1 that is blown out from the main current blowout port 66 and flows along the lower wall portion 126D and the first inclined wall portion 126C of the blowout body main body portion 126 (and the air current F2 of the air engulfed by this air current F1), by turning the flap 132.

### (Blowout Body 134 According to Third Reference Example)

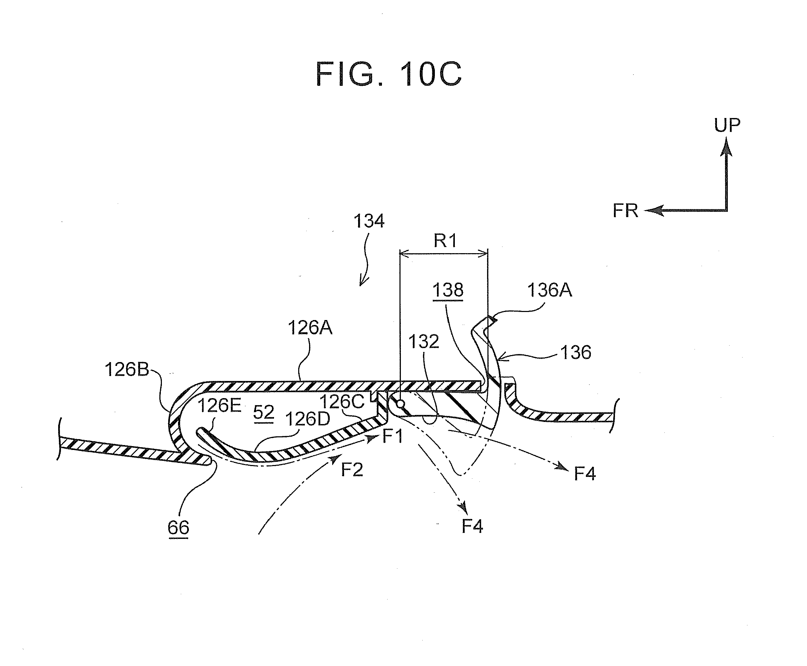

As shown in FIG. 10C, the blowout body 134 according to the present reference example is characterized in that a circular wall 136 is provided at a distal end of the flap 132 of the blowout body 130 according to the aforementioned second reference example. Concretely, the circular wall 136 is formed with a circular cross-section as viewed from beside the vehicle, and extends from the distal end of the flap 132 toward the vehicle upper side and such that the distance from a turning axis of this flap 132 becomes equal to R1. Besides, this circular wall 136 is inserted through an opening 138 that is formed through the upper wall portion 126A of the blowout body main body portion 126. Furthermore, a bent portion 136A that is bent radially outward of this circular wall 136 is formed at a distal end of the circular wall 136. In this configuration, the turning angle of the flap 132 is regulated through the abutment of this bent portion 136A on an edge of the opening 138 through which the circular wall 136 is inserted.

The blowout body 134 according to the present reference example described above makes it possible to adjust the wind direction of the air current F1 that is blown out from the main current blowout port 66 and flows along the lower wall portion 126D and the first inclined wall portion 126C of the blowout body main body portion 126 (and the air current F2 of the air engulfed by this air current F1) by turning the flap 132. Furthermore, in the present reference example, since the circular wall 136 configured as described above is provided, no sharp region is formed at the distal end of the flap 132. As a result, the design of the appearance of the blowout body 134 can be improved in quality.

### (Blowout Body 140 According to Fourth Reference Example)

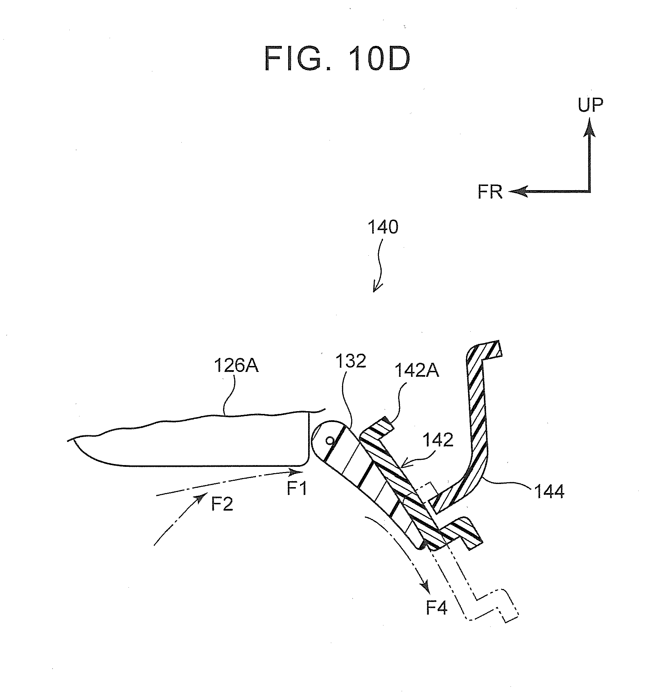

As shown in FIG. 10D, the blowout body 140 according to the present reference example is characterized by being provided with an extension flap 142 in addition to the flap 132 of the blowout body 130 according to the aforementioned second reference example. Concretely, the extension flap 142 is formed substantially in the shape of a plate that extends in the vehicle width direction, and is slidably supported on an upper surface of the flap 132. As a result, the extension flap 142 can slide along a direction from a proximal end of the flap 132 to a distal end thereof. Besides, a bent portion 142A that regulates the sliding amount of the extension flap 142 through abutment on an abutted member 144 is formed at an end of the extension flap 142.

The blowout body 140 according to the present reference example described above makes it possible to adjust the lengths of the flaps (the flap 132 and the extension flap 142) by sliding the extension flap 142. As a result, the length of the flap 132 can be made short.

### (Blowout Body 146 According to First Reference Example)

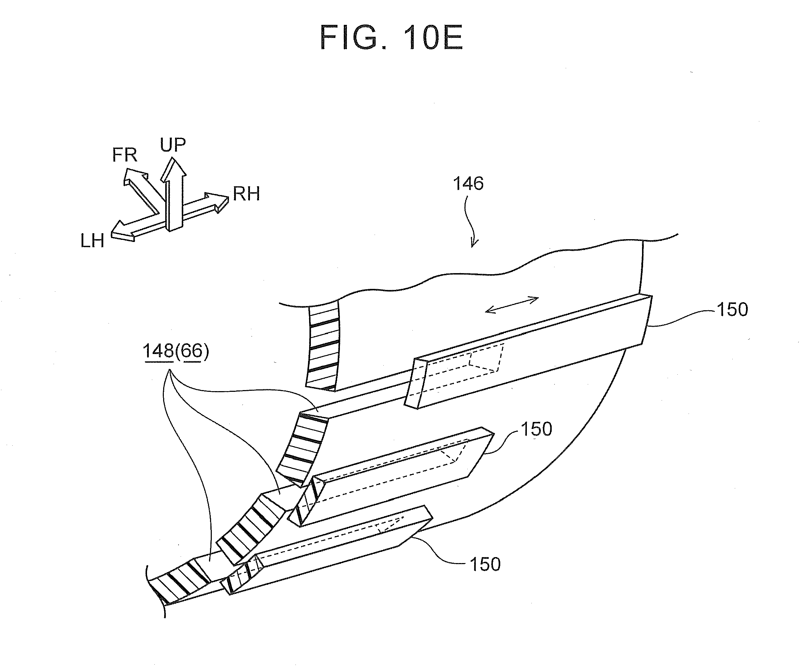

As shown in FIG. 10E, the blowout body 146 according to the present reference example is characterized in that the main current blowout ports 66 are formed by a plurality of slits 148 that are formed in such a manner as to open toward the vehicle rear side and diagonally toward the vehicle lower side, and that these slits 148 can be opened/closed by open/close lids 150 respectively. Concretely, the blowout body 146 is provided with the slits 148 whose longitudinal direction coincides with the vehicle width direction, along the vehicle vertical direction. Besides, the open/close lids 150 that open/close these slits 148 are formed in the shape of an elongate plate along the shape of the openings of the slits 148, and are slidably supported along the longitudinal direction of the slits 148 respectively. The slits 148 are configured to be opened/closed by sliding these open/close lids 150 respectively.

The blowout body 146 according to the present reference example described above makes it possible to blow out the air introduced into the blowout body 146 from an arbitrary one of the slits 148 (the main current blowout ports 66) by sliding the open/close lids 150. In other words, the wind direction of the air current blown out from the blowout body 146 can be adjusted by sliding the open/close lids 150.

### (Blowout Body 152 According to Sixth Reference Example)

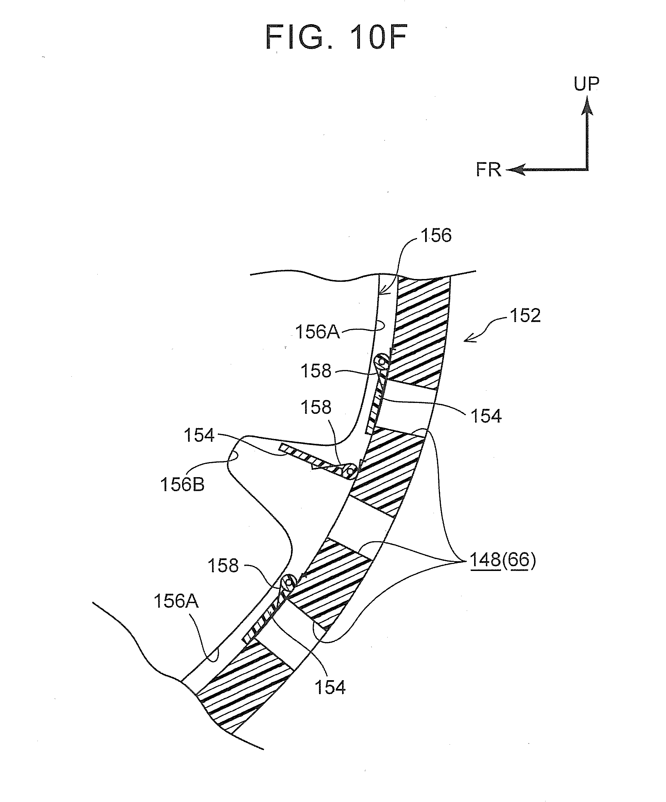

As shown in FIG. 10F, the blowout body 152 according to the present reference example is characterized in that open/close lids 154 that open/close the slits 148 respectively and a selection member 156 that selectively opens/closes these open/close lids 154 are provided inside the blowout body 152. Concretely, the open/close lids 154 are formed substantially in the shape of a plate along the shape of the openings of the slits 148 respectively, and have proximal ends that are turnably and pivotally supported along the edges of the slits 148 respectively. The slits 148 are configured to be opened/closed by turning these open/close lids 154 respectively. Besides, these open/close lids 154 are urged in such a direction that the slits 148 are opened, by springs 158 respectively.

Besides, the selection member 156 is formed substantially in the shape of a circular plate that extends in the vehicle longitudinal direction, and is equipped with a general surface 156A that is formed along the shape of an inner wall of the blowout body 152 in a region where the slits 148 are provided. Furthermore, the selection member 156 is equipped with a recess portion 156B that is formed in such a manner as to sink radially inward of this selection member from the general surface 156A. Besides, that one of the open/close lids 154 which is opposed to this recess portion 156B can turn to a position at which a corresponding one of the slits 148 is open, without interfering with the general surface 156A. On the contrary, that one of the open/close lids 154 which is at a position opposed to the general surface 156A interferes with this general surface 156A, and is held at such a position as to close a corresponding one of the slits 148. Besides, this selection member 156 is connected to a lever (not shown). By operating this lever, the selection member 156 is turned along the inner wall of the blowout body 152 in the region where the slits 148 are provided.

In the blowout body 152 according to the present reference example described above, the slits 148 are selectively opened/closed through the turning of the selection member 156. As a result, the air introduced into the blowout body 152 from an arbitrary one of the slits 148 (the main current blowout ports 66) can be blown out. In other words, the wind direction of the air current blown out from the blowout body 152 can be adjusted through the turning of the selection member 156.

### (Blowout Body 160 According to Seventh Reference Example)

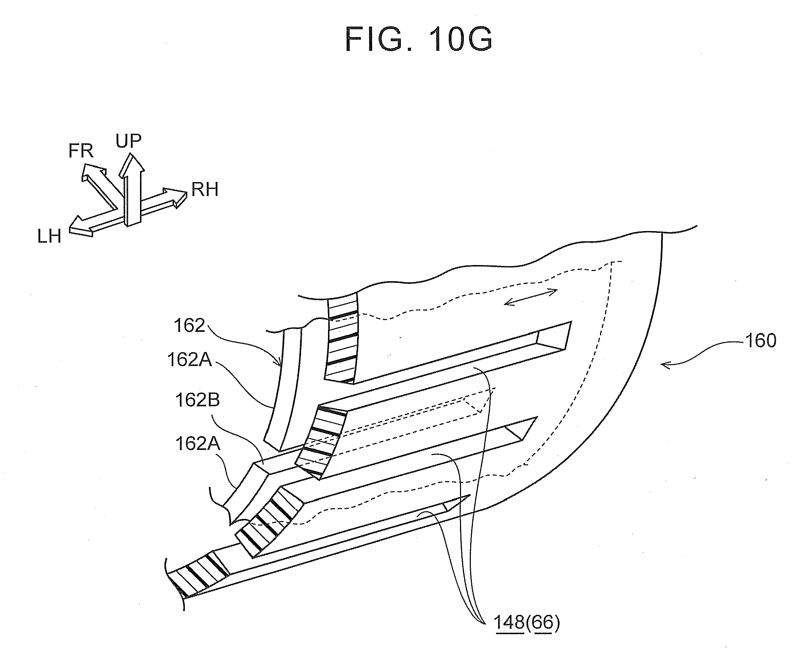

As shown in FIG. 10G, the blowout body 160 according to the present reference example is characterized in that a selection member 162 that selectively opens/closes the slits 148 is provided inside the blowout body 160, instead of the open/close lids 150 of the blowout body 146 according to the fifth reference example. Concretely, the selection member 162 is formed substantially in the shape of a cylinder with the axis thereof extending along the vehicle width direction, and is equipped with general portions 162A that extend along inner walls of the blowout body 160 in regions where the slits 148 are provided respectively. Openings 162B whose longitudinal direction coincides with the vehicle width direction are formed through these general portions 162A respectively. In this configuration, the air that has flowed into the blowout body 160 can be blown out through the openings 162B and the slits 148, through communication between these openings 162B and the slits 148. Besides, this selection member 162 is connected to a lever (not shown).

In the blowout body 160 according to the present reference example described above, the slits 148 are selectively opened/closed through rotation of the selection member 162. As a result, the air introduced into the blowout body 160 can be blown out from an arbitrary one of the slits 148 (the main current blowout ports 66). In other words, the wind direction of the air current blown out from the blowout body 160 can be adjusted through rotation of the selection member 162.

### (Modification Examples of Arrangement of Fans)

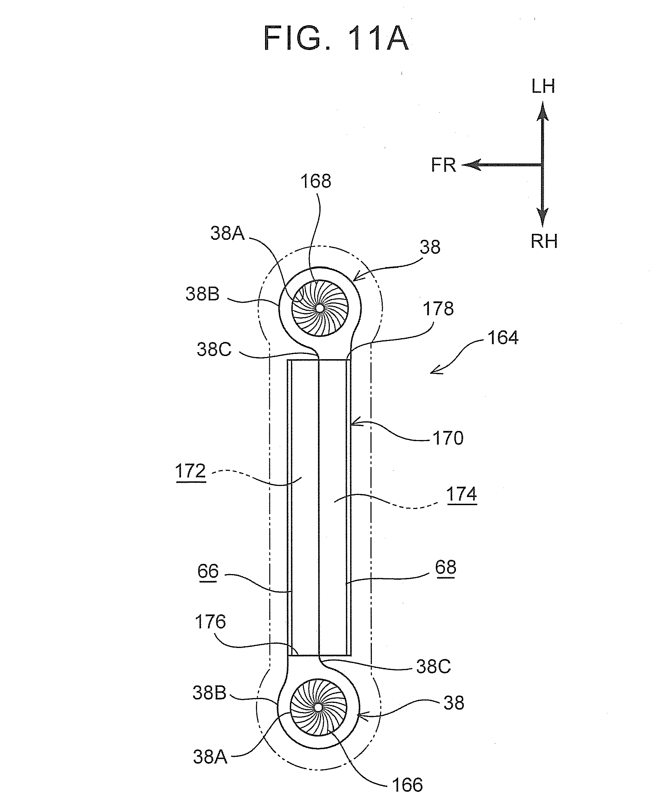

Next, modification examples of the arrangement of the fans according to the aforementioned embodiment of the invention will be described using FIGS. 11A to 11D. Incidentally, those members and regions which are the same as in the aforementioned embodiment of the invention and the like will be denoted by the same reference symbols respectively, and the description thereof will be omitted.

### (Arrangement of Fans According to First Modification Example)

As shown in FIG. 11A, a vehicular air-conditioning device 164 according to the present modification example is characterized in that a main current fan 166 that produces an air current blown out from the main current blowout port 66 and a wind direction adjustment current fan 168 that produces an air current blown out from the wind direction adjustment current blowout port 68 are provided on the left and right of a blowout body 170 respectively in the vehicle width direction. Concretely, the blowout body 170 is formed long with its longitudinal direction coincident with the vehicle width direction, and is equipped with a first flow channel 172 that is provided on the vehicle front side, and a second flow channel 174 that is provided on the vehicle rear side. Besides, the blowout body 170 is provided with the main current blowout port 66 that opens diagonally toward the vehicle rear side and is formed in the shape of an elongate hole with its longitudinal direction coincident with the vehicle width direction, along the first flow channel 172, and is provided with the wind direction adjustment current blowout port 68 that opens toward the vehicle lower side and is formed in the shape of an elongate hole with its longitudinal direction coincident with the vehicle width direction, along the second flow channel 174. Furthermore, an introduction port 176 into which an air current produced by the main current fan 166 is introduced is formed in an open state at one end (a right end in the vehicle width direction) of the first flow channel 172. This introduction port 176 is connected to the flange portion 38C of the shroud 38 of the main current fan 166. Besides, the other end (a left end in the vehicle width direction) of the first flow channel 172 is a closed end. Furthermore, an introduction port 178 into which an air current produced by the wind direction adjustment current fan 168 is introduced is formed in an open state at one end (a right end in the vehicle width direction) of the second flow channel 174. This introduction port 178 is connected to the flange portion 38C of the shroud 38 of the wind direction adjustment current fan 168. Besides, the other end (a left end in the vehicle width direction) of the second flow channel 174 is a closed end. Incidentally, the main current fan 166 and the wind direction adjustment current fan 168 are sirocco fans as is the case with the aforementioned embodiment of the invention.

In the vehicular air-conditioning device 164 according to the present modification example, the air current produced through the operation of the main current fan 166 flows into the first flow channel 172 of the blowout body 170. Besides, the air current that has flowed into this first flow channel 172 is blown out from the main current blowout port 66, and then flows behind the cabin 12 (see FIG. 2).

Furthermore, the air current produced through the operation of the wind direction adjustment current fan 168 flows into the second flow channel 174 of the blowout body 170. Besides, the air current that has flowed into this second flow channel 174 is blown out from the wind direction adjustment current blowout port 68, and then collides with (converges into) a lateral portion of the air current blown out from the main current blowout port 66. As a result, the wind direction of the air current F1 blown out from the main current blowout port 66 (and the air current F2 of the air engulfed by this air current F1) is changed. Besides, in the present embodiment of the invention, the wind direction of the air current F1 blown out from the main current blowout port 66 (and the air current F2 engulfed by this air current F1) can be adjusted by adjusting the output of the wind direction adjustment current fan 168 as the wind direction adjustment portion.

### (Arrangement of Fan According to Second Modification Example)

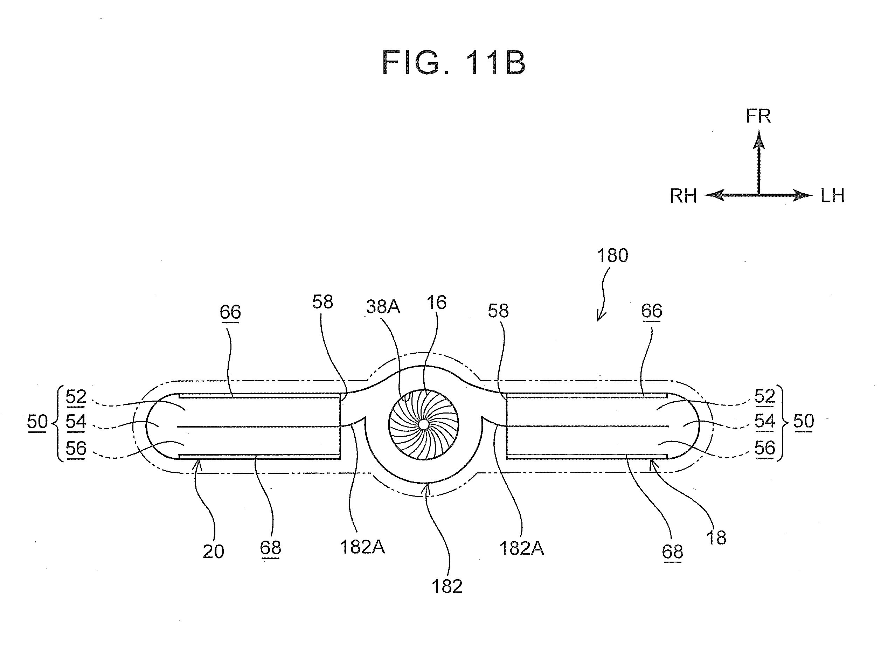

As shown in FIG. 11B, a vehicular air-conditioning device 180 according to the present modification example is characterized in that the fan 16 is arranged between the blowout body 18 and the blowout body 20. Concretely, the fan 16 is covered with a shroud 182 having a flange portion 182A that is connected to the introduction port 58 of the blowout body 18 and the introduction port 58 of the blowout body 20.

In the vehicular air-conditioning device 180 according to the present modification example described above, the dimension in the vehicle longitudinal direction can be set more compact than in the vehicular air-conditioning device 180 according to the aforementioned embodiment of the invention.

### (Arrangement of Fan According to Third Modification Example)

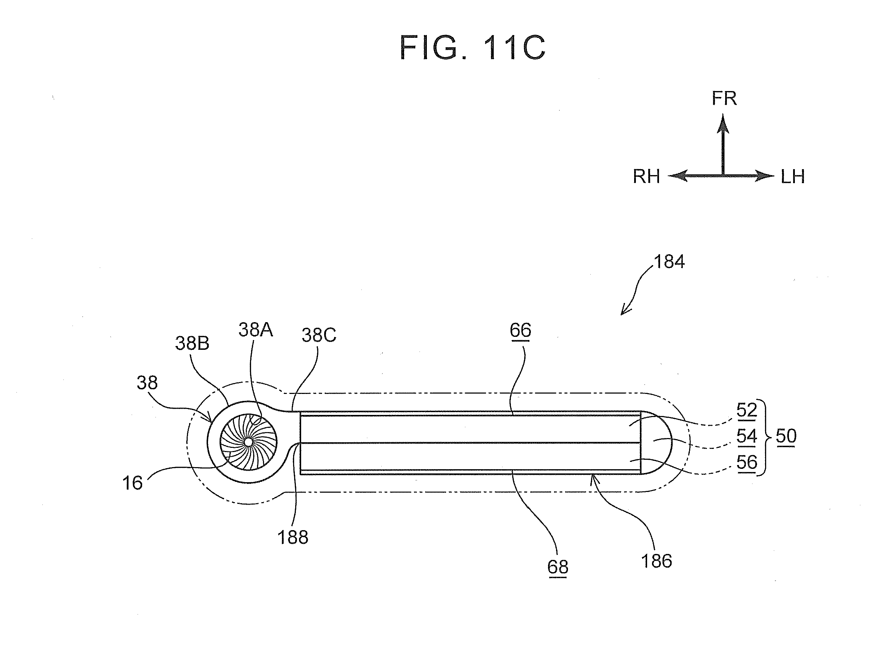

As shown in FIG. 11C, a vehicular air-conditioning device 184 according to the present modification example is characterized by being provided with a single blowout body 186 that is formed long in the vehicle width direction, and in that the fan 16 is arranged at a right end of this blowout body 186 in the vehicle width direction. Concretely, the blowout body 184 is identical in configuration to the blowout body 18 according to the aforementioned embodiment of the invention, but the blowout body 186 according to the present modification example is formed longer in the vehicle width direction than the blowout body 18 according to the aforementioned embodiment of the invention. Besides, an introduction port 188 of this blowout body 186 is provided on the right side in the vehicle width direction, and the flange portion 38C of the shroud 38 that covers the fan 16 is connected to this introduction port 188.

In the vehicular air-conditioning device 184 according to the present modification example described above, the dimension in the vehicle longitudinal direction can be set more compact than in the vehicular air-conditioning device 184 according to the aforementioned embodiment of the invention. Incidentally, although the example in which the fan 16 is arranged at the right end of the blowout body 186 in the vehicle width direction has been described in the present modification example, the invention is not limited thereto. It is also acceptable to adopt a configuration in which the fan 16 is arranged at a left end of the blowout body 186 in the vehicle width direction.

### (Arrangement of Fans According to Fourth Modification Example)

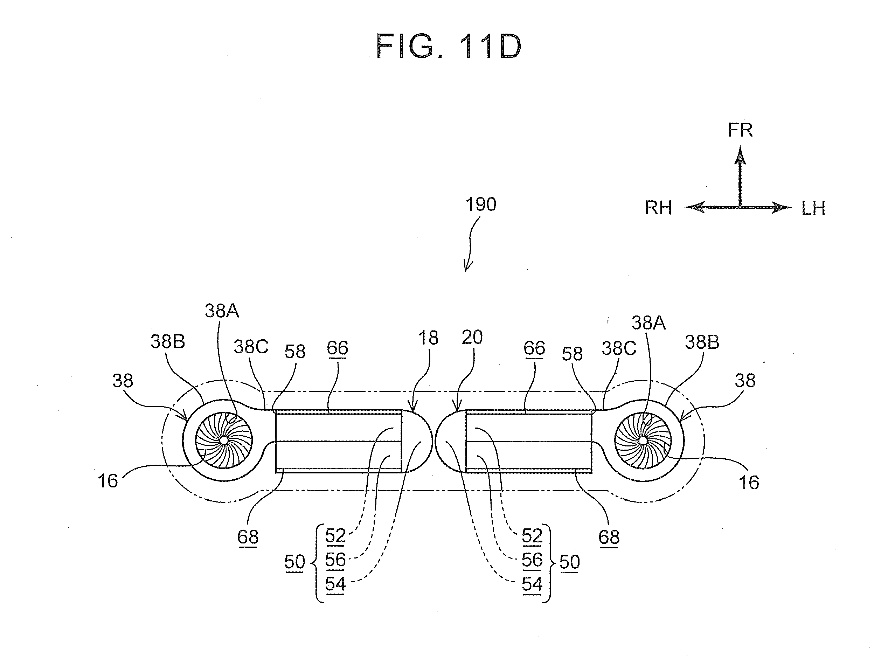

As shown in FIG. 11D, in a vehicular air-conditioning device 190 according to the present modification example, the blowout body 20 according to the aforementioned embodiment of the invention is arranged on the left side in the vehicle width direction, and the blowout body 18 is arranged on the right side in the vehicle width direction. Besides, in the present modification example, the fans 16 are arranged outside the blowout body 20 and the blowout body 18 in the vehicle width direction respectively, and the flange portions 38C of the shrouds 38 that cover the fans 16 respectively are connected to the introduction port 58 of the blowout body 20 and the introduction port 58 of the blowout body 18 respectively.

In the vehicular air-conditioning device 190 according to the present modification example described above, the air volume and the like of the air current blown out from each of the blowout body 20 and the blowout body 18 can be adjusted to an arbitrary air volume and the like.

### (Modification Examples of Flow Rate Adjustment Portion〉

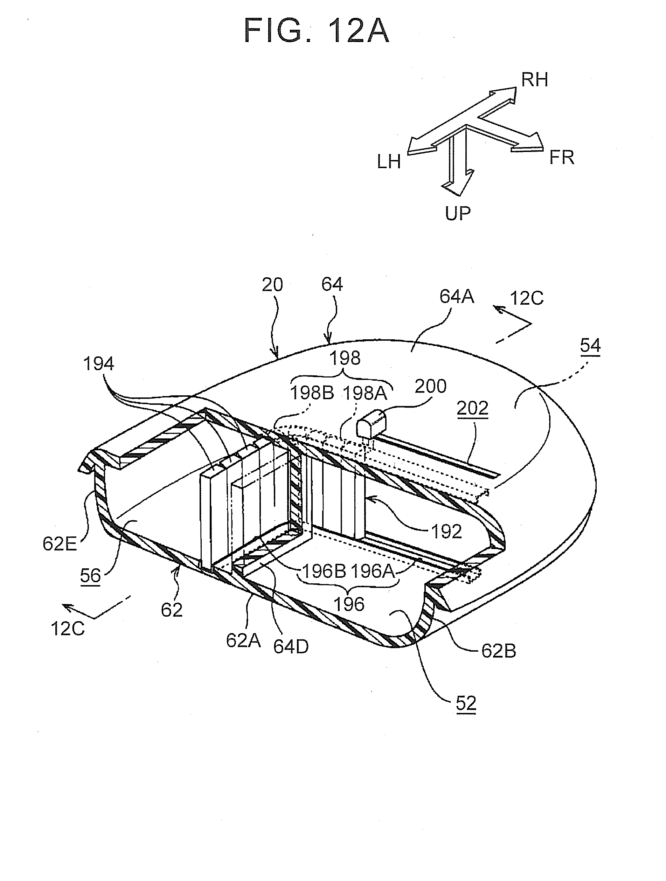

Next, modification examples of the flow rate adjustment portion (the damper 60) according to the aforementioned embodiment of the invention will be described using FIGS. 12A to 16B. Incidentally, those members and regions which are the same as in the aforementioned embodiment of the invention and the like will be denoted by the same reference symbols respectively, and the description thereof will be omitted.

### (Flow Rate Adjustment Portion According to First Modification Example)

As shown in FIG. 12A, the flow rate adjustment portion according to the present modification example is characterized by being constituted by a shutter 192 that opens/closes the space between the first flow channel 52 and the second flow channel 54. Concretely, the shutter 192 is configured such that a plurality of pieces 194 that are formed substantially in the shape of a prism whose longitudinal direction coincides with the vehicle vertical direction are coupled to one another via pins (not shown), and that each adjacent ones of the pieces 194 can turn with respect to each other around a corresponding one of the pins. Besides, in the case where the shutter 192 is integrally molded using a resinous material, the plurality of the pieces 194 may be coupled to one another by integral hinges to constitute the shutter 192.

Besides, guide grooves 196 and 198 that slidably support the aforementioned shutter 192 are formed in the upper wall portion 62A of the upper constituent 62 that constitutes the upper portion of the blowout body 20, and the lower wall portion 64A of the lower constituent 64 that constitutes the lower portion of the blowout body 20, respectively. These guide grooves 196 and 198 have first groove portions 196A and 198A that traverse the space between the first flow channel 52 and the second flow channel 54, and second groove portions 196B and 198B that extend from ends of these first groove portions 196A and 198A on the vehicle rear side along the third flow channel 56, respectively, and hence are formed substantially in the shape of L.

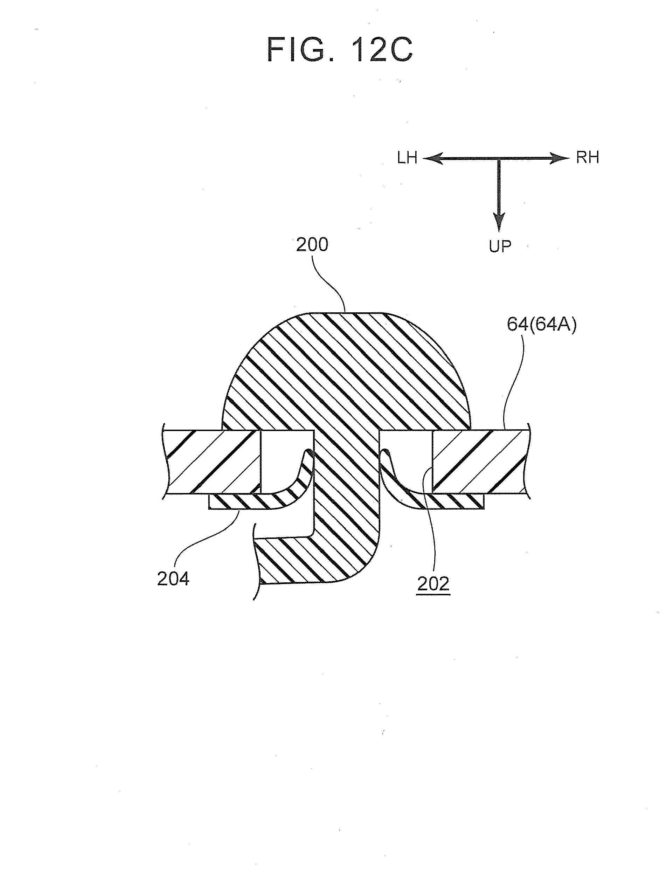

Besides, a lever 200 for sliding this shutter 192 along the aforementioned guide grooves 196 and 198 is connected to the shutter 192. This lever 200 protrudes from an opening 202 that is formed through the lower wall portion 64A of the lower constituent 64. Besides, this opening 202 is formed in the shape of a long hole along the first groove portion 198A. Besides, as shown in FIG. 12C, a sealing material 204 is provided between the lever 200 and the opening 202. As a result, the air that has flowed into the blowout body 20 is restrained from leaking out from between the lever 200 and the opening 202.

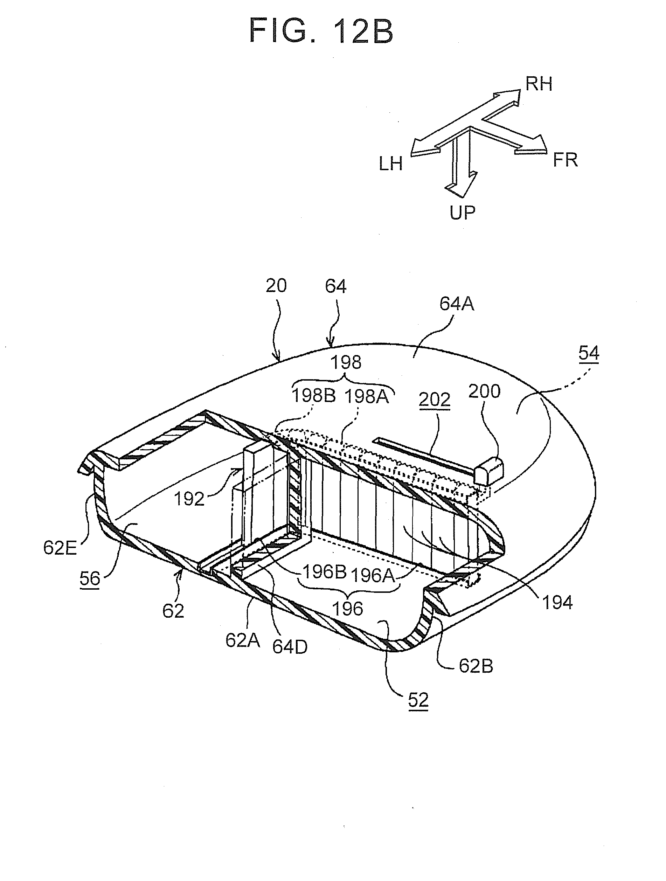

As shown in FIG. 12A and FIG. 12B, the lever 200 is operated along the opening 202, thereby allowing the shutter 192 to open/close the space between the first flow channel 52 and the second flow channel 54. As a result, the flow rate of the air current flowing from the first flow channel 52 into the third flow channel 56 via the second flow channel 54 is adjusted.

### (Flow Rate Adjustment Portion According to Second Modification Example)

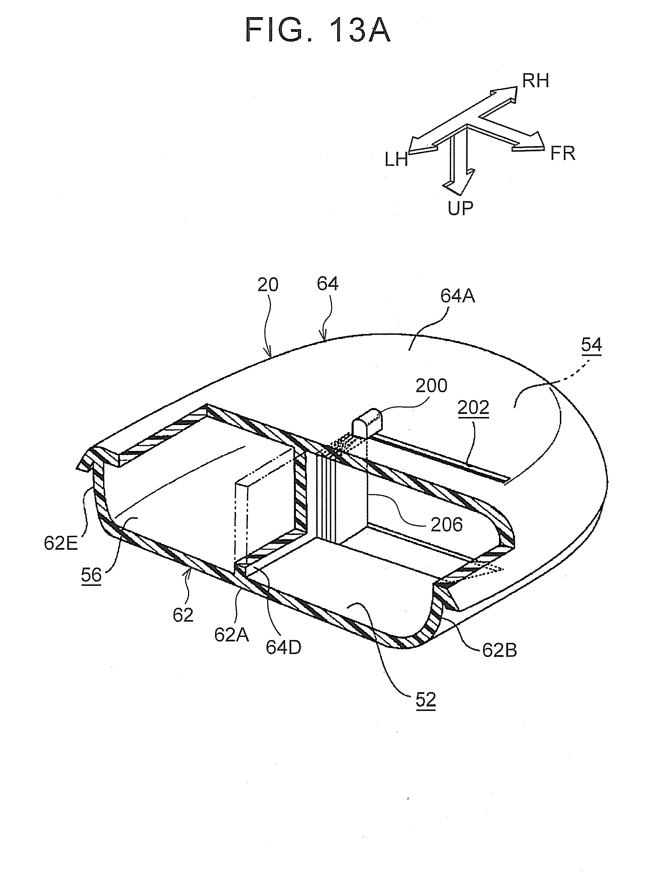

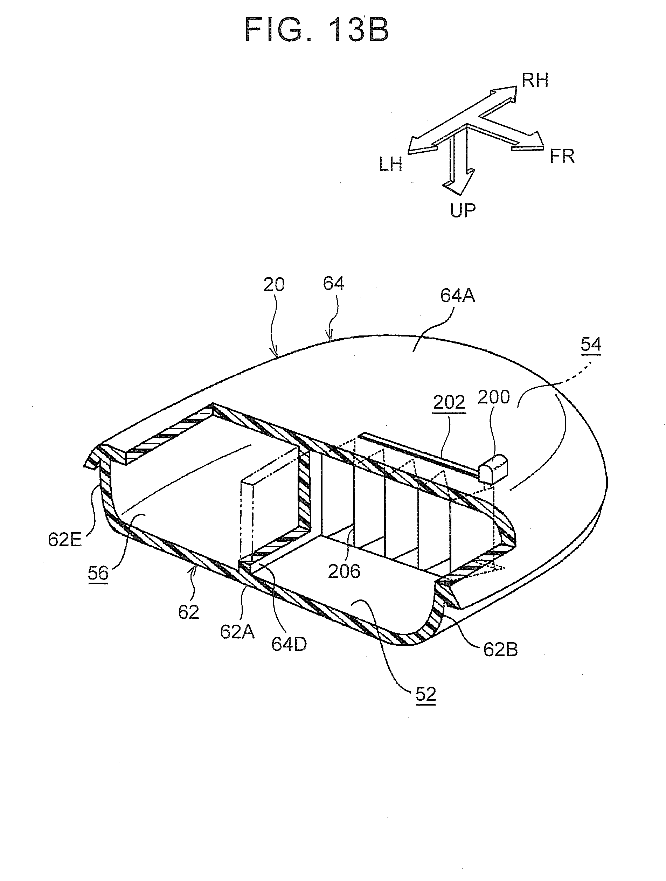

As shown in FIG. 13A and FIG. 13B, the flow rate adjustment portion according to the present modification example is characterized by being constituted by a corrugated plate 206 that opens/closes the space between the first flow channel 52 and the second flow channel 54. Concretely, the corrugated plate 206 is formed by folding (alternately mountain-folding and valley-folding) a plate-shaped member along the vehicle longitudinal direction. As a result, the corrugated plate 206 is configured retractably along the vehicle longitudinal direction. The lever 200 that is configured in the same manner as the flow rate adjustment portion (the shutter 192) according to the aforementioned first modification example is connected to this corrugated plate 206. By operating this lever 200 along the opening 202, the corrugated plate 206 opens/closes the space between the first flow channel 52 and the second flow channel 54. As a result, the flow rate of the air current flowing from the first flow channel 52 into the third flow channel 56 via the second flow channel 54 is adjusted.

### (Flow Rate Adjustment Portion According to Third Modification Example)

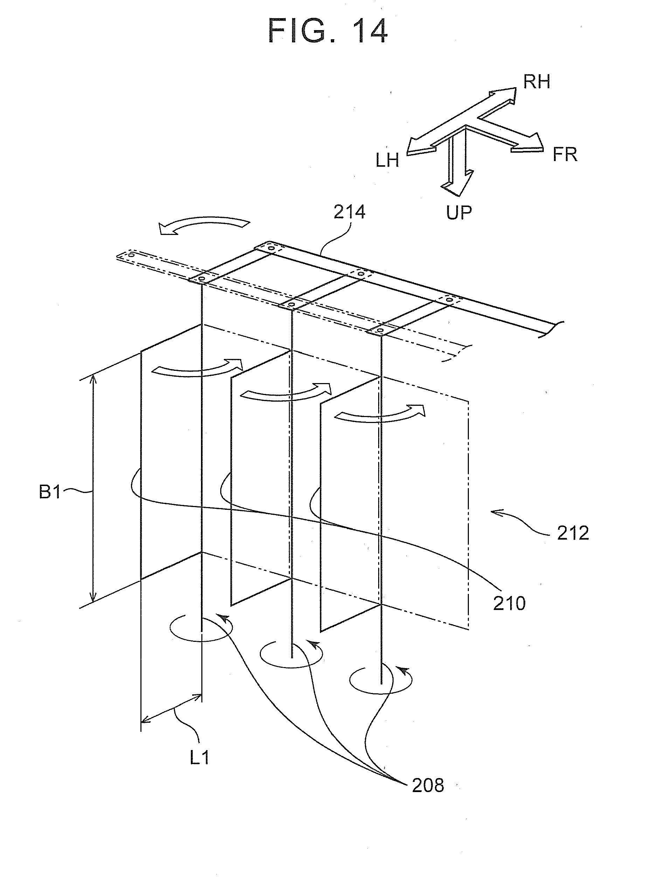

As shown in FIG. 14, the flow rate adjustment portion according to the present modification example is characterized by being constituted by a multi shutter 212 having a plurality of turning shafts 208 that are arranged at intervals of a predetermined distance in the vehicle longitudinal direction, and substantially rectangular closure plates 210 whose proximal ends are supported by these turning shafts 208 respectively. Concretely, a length L1 from the proximal end of each of the closure plates 210 to a distal end thereof is set substantially equal to the distance between adjacent ones of the turning shafts 208, and a width B1 (the length in the vehicle vertical direction) of each of the closure plates 210 is set substantially equal to the distance (the distance in the vehicle vertical direction) between the upper wall portion 62A of the blowout body 20 and the lower wall portion 64A thereof (see FIG. 13A and the like). Besides, each of the closure plates 210 that is supported by a corresponding one of the turning shafts 208 turns substantially by the same angle via a rod 214. The present embodiment of the invention is configured such that each of the closure plates 210 assumes a fully closed state indicated by an alternate long and two short dashes line in FIG. 14 by turning a corresponding one of the turning shafts 208 by 90° from a fully open state indicated by a solid line in FIG. 14. The multi shutter 212 described above is provided between the first flow channel 52 and the second flow channel 54.

### (Flow Rate Adjustment Portion According to Fourth Modification Example)

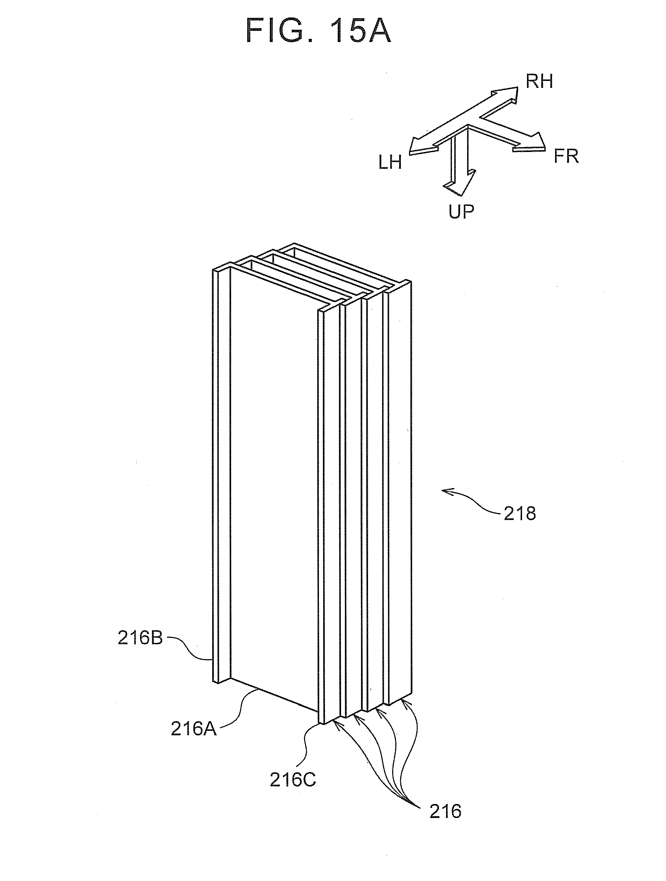

As shown in FIG. 15A, the flow rate adjustment portion according to the present modification example is characterized by being constituted by a shutter 218 having a plurality of closure plates 216 that are formed in the shape of a plate. Concretely, the closure plates 216 that constitute the shutter 218 are equipped with general portions 216A that are formed substantially rectangularly. Besides, each of bent portions 216B that extends in a bent manner in the board thickness direction of a corresponding one of the general portions 216A is formed at one end of the corresponding one of the general portions 216A. Besides, each of vertical walls 216C that extends perpendicularly to the direction of extension of a corresponding one of the general portions 216A is formed at the other end of the corresponding one of the general portions 216A.

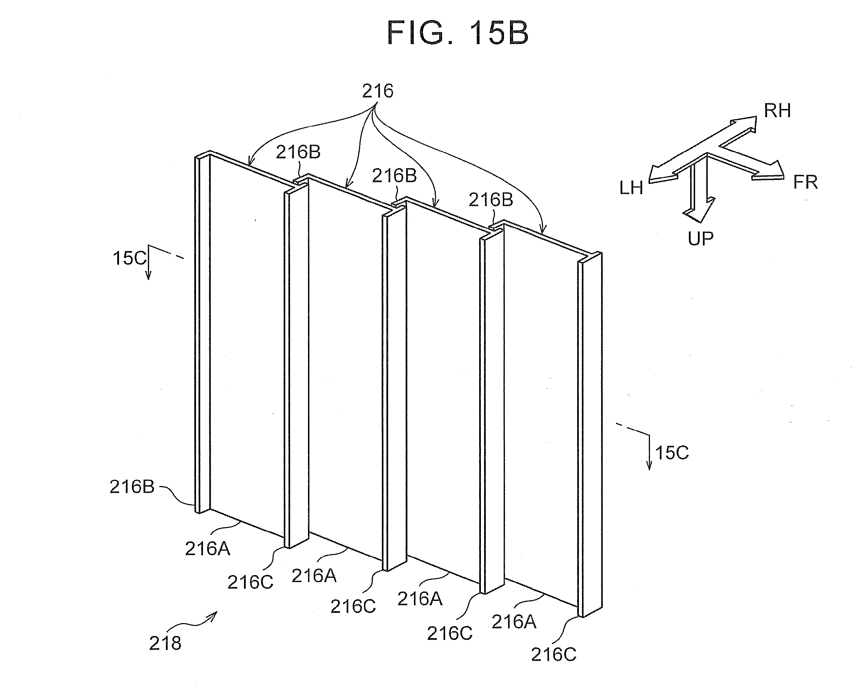

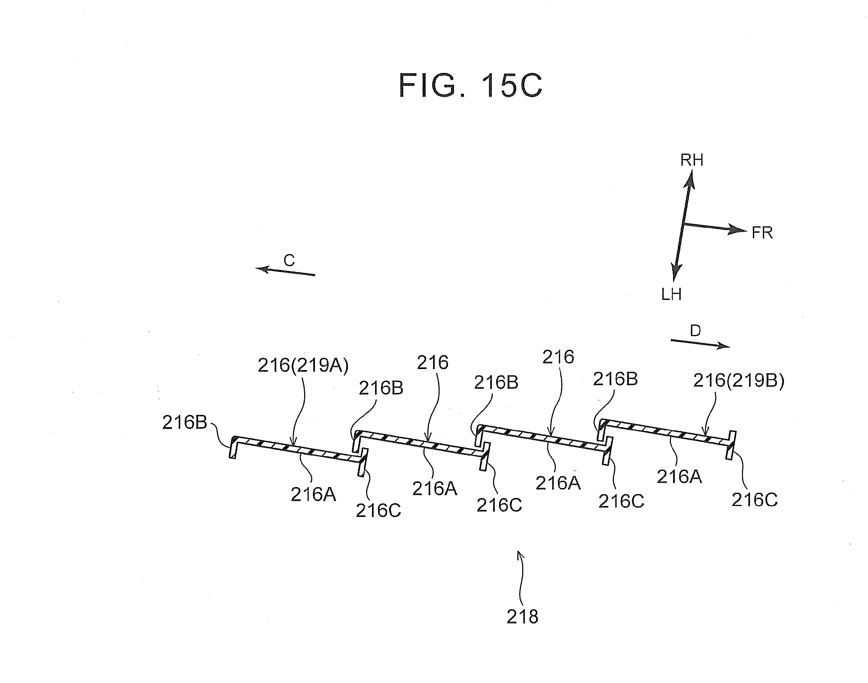

The space between the first flow channel 52 and the second flow channel 54 is configured to be open, with the plurality of the closure plates 216 arranged to be superposed on one another in the board thickness direction of the general portions 216A. Besides, as shown in FIG. 15B, the space between the first flow channel 52 and the second flow channel 54 is configured to be closed through the deployment of the plurality of the closure plates 216 in the direction perpendicular to the board thickness direction of the general portions 216A. Furthermore, as shown in FIG. 15C, the respective closure plates 216 are arranged such that the bent portion 216B and the vertical wall 216C of each adjacent ones of the closure plates 216 abut on each other as the plurality of the closure plates 216 are deployed perpendicularly to the board thickness direction of the general portions 216A. As a result, all the closure plates 216 can be deployed by moving only the closure plate 216 (219A) in the direction of an arrow C or moving only the closure plate 216 (219B) in the direction of an arrow D. The shutter 218 described above is provided between the first flow channel 52 and the second flow channel 54.

### (Flow Rate Adjustment Portion According to Fifth Modification Example)

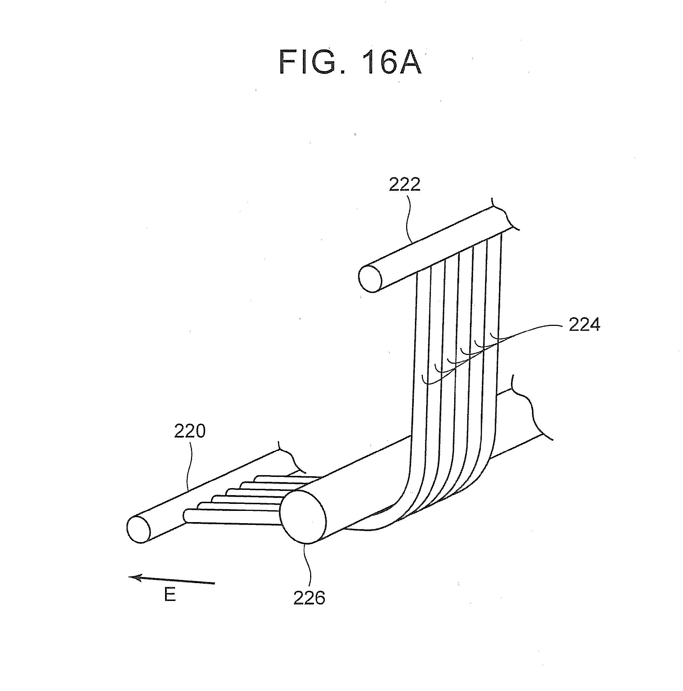

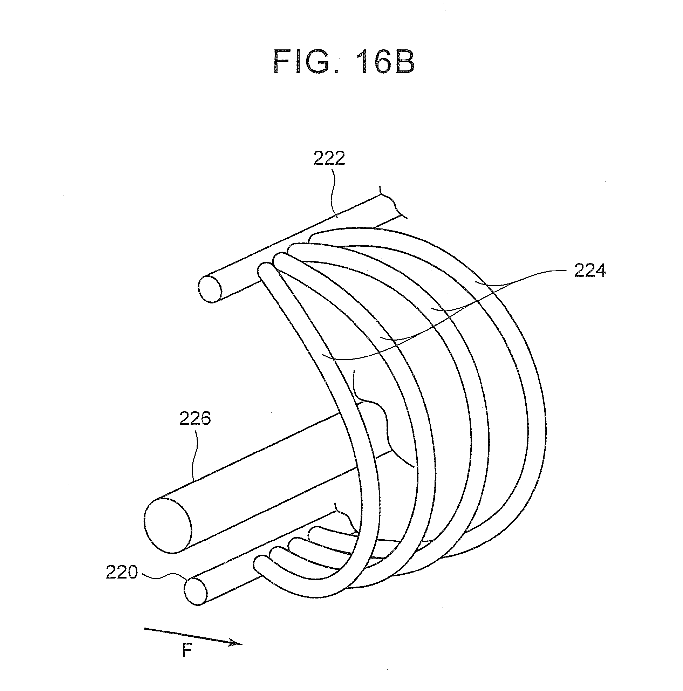

As shown in FIG. 16A and FIG. 16B, the flow rate adjustment portion according to the present modification example is characterized by being constituted by a plurality of closure threads 224 that are provided in such a manner as to be hung between a support shaft 220 and a support shaft 222, which are formed in the shape of a cylinder. Concretely, the closure threads 224 are formed with a predetermined thickness by, for example, knitting a resinous material, and each of these closure threads 224 is fixed on one end side thereof to the support shaft 220 in such a state that each adjacent ones of the closure threads 224 are arranged in proximity to each other. Besides, by the same token, each of the closure threads 224 is fixed on the other end side thereof to the support shaft 222 in such a state that each adjacent ones of the closure threads 224 are arranged in proximity to each other. Incidentally, a support shaft 226 that supports intermediate portions of the closure threads 224 is provided between the support shaft 220 and the support shaft 222.

As shown in FIG. 16A, due to the movement of the support shaft 220 in the direction of an arrow E, a tensile force is applied to the closure threads 224, and each adjacent ones of the closure threads 224 cling to each other. As a result, the air current cannot flow through the spaces among the closure threads 224. Conversely, as shown in FIG. 16B, when the support shaft 220 is moved in the direction of an arrow F, the tensile force applied to the closure threads 224 is released, and a gap is created between each adjacent ones of the closure threads 224. As a result, the air current can flow through the spaces among the closure threads 224. The closure threads 224 described above are provided between the first flow channel 52 and the second flow channel 54.

Although the one embodiment of the invention has been described, the invention is not limited to the foregoing. As a matter of course, the invention can be carried out after being modified in various manners so as to be different from the foregoing, without departing from the gist thereof.

## Claims

1. A vehicular air-conditioning device comprising:
a fan that operates to produce an air current;
a flow channel into which the air current produced by the fan is introduced;
a first blowout port from which the air current introduced into the flow channel is blown out toward a cabin; and
a second blowout port from which the air current introduced into the flow channel is blown out toward the cabin, and which is arranged such that the air current thus blown out intersects with the air current blown out from the first blowout port.

2. The vehicular air-conditioning device according to claim 1, further comprising:
a flow rate adjustment portion that adjusts a flow rate of the air current blown out from the second blowout port.

3. The vehicular air-conditioning device according to claim 2, wherein
a lever for operating the flow rate adjustment portion is provided at a position that is offset from a position that is opposed to the first blowout port and the second blowout port in such a direction as to intersect with both a blowout direction of the first blowout port and a blowout direction of the second blowout port.

4. The vehicular air-conditioning device according to any one of claims 1 to 3, wherein
the air current produced by the fan is introduced into a ceiling portion of the cabin, and
the ceiling portion of the cabin is provided with a blowout body that is equipped with the first blowout port, which is provided in such a manner as to open toward a vehicle rear side, and the second blowout port, which is provided in such a manner as to open toward a vehicle lower side.

5. The vehicular air-conditioning device according to claim 4, wherein
the first blowout port is provided upstream of the air current introduced into the blowout body, and
the second blowout port is provided downstream of this air current.

6. The vehicular air-conditioning device according to claim 4 or 5, wherein an introduction port for air introduced into the fan is provided on a vehicle front side with respect to the first blowout port and the second blowout port.

7. The vehicular air-conditioning device according to any one of claims 4 to 6, wherein
the second blowout port is arranged at a position spaced apart from the air current blown out from the first blowout port.

8. The vehicular air-conditioning device according to claim 6, wherein
the introduction port is provided with a wall surface that is arranged in such a manner as to be inclined toward a direction of a ceiling of the cabin.

9. The vehicular air-conditioning device according to any one of claims 4 to 8, wherein
the fan, whose axis extends along a vehicle vertical direction, is provided on the ceiling portion of the cabin.
